# EUROPEAN PATENT APPLICATION

(11) **EP 4 380 070 A1**
(43) Date of publication of application: **05.06.2024**
(21) Application number: 22876940.2
(22) Date of filing: 30.09.2022
(51) Int. Cl.: H04B 7/06, H04W 84/04, H04W 92/20

(54) **APPARATUS AND METHOD FOR BEAM OPERATION OF IAB NODE IN WIRELESS COMMUNICATION SYSTEM**

(30) Priority: 01.10.2021 KR 20210130839; 28.10.2021 KR 20210145995
(71) Applicant: Samsung Electronics Co., Ltd., Suwon-si, Gyeonggi-do 16677 (KR)
(72) Inventor: CHOI, Seunghoon, Suwon-si, Gyeonggi-do 16677 (KR); KIM, Youngbum, Suwon-si, Gyeonggi-do 16677 (KR); RYU, Hyunseok, Suwon-si, Gyeonggi-do 16677 (KR); SHIN, Cheolkyu, Suwon-si, Gyeonggi-do 16677 (KR)
(74) Representative: Gulde & Partner
(86) International application number: PCT/KR2022/014751
(87) International publication number: WO 2023/055168

(57) **Abstract**

The present disclosure relates to a 5G or 6G communication system for supporting a higher data transmission rate. One embodiment of the present disclosure can provide a transmission/reception method and apparatus using a beam in an integrated access and backhaul (IAB) node.

## Description

### [Technical Field]

The disclosure relates to a wireless communication system and, specifically, to a method and an apparatus for transmission or reception through a beam in an integrated access and backhaul (IAB) node.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G.

In the initial state of 5G mobile communication technologies, in order to support services and to satisfy performance requirements in connection with enhanced Mobile BroadBand, (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there is ongoing discussion regarding improvement and performance enhancement of initial 5G mobile communication technologies in view of services to be supported by 5G mobile communication technologies, and there has been physical layer standardization regarding technologies such as V2X for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is impossible, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Various research is recently being conducted to utilize an integrated access and backhaul (IAB) technology, and accordingly it is also required to improve dual access of an IAB node.

### [Disclosure of Invention]

### [Technical Problem]

An embodiment of the disclosure is to provide an IAB node beam management method and an IAB node operation method according thereto, and an apparatus therefor when an IAB node supports a multiplexing scheme (time division multiplexing (TDM) or frequency division multiplexing (FDM) and/or spatial division multiplexing (SDM)).

The technical subjects pursued in the disclosure may not be limited to the above-mentioned technical subjects, and other technical subjects which are not mentioned may be clearly understood, through the following descriptions, by those skilled in the art to which the disclosure pertains.

### [Solution to Problem]

To solve the problems above, a method performed by a base station in a wireless communication system according to an embodiment of the disclosure may include determining information indicating a restricted beam which cannot be used for transmission or reception by a distributed unit (DU) of an integrated access and backhaul (IAB) node connected to the base station, and transmitting a message including the information indicating the restricted beam to the IAB node.

In addition, the message further may further include information on a beam to be used for data transmission or reception by a mobile termination (MT) of the IAB node.

In addition, the information indicating the restricted beam may include at least one of identification information on a channel state information reference signal (CSI-RS) or identification information on a a synchronization signal block (SSB).

In addition, the information indicating the restricted beam may be applied in case that the IAB mode operates in a non-time division multiplexing (TDM) mode.

In addition, the message may include a medium access control (MAC) control element (CE).

In addition, the method may further include receiving information indicating a recommended beam of the IAB node from the IAB node.

In addition, the information indicating the recommended beam may include at least one of identification information on a channel state information reference signal (CSI-RS), identification information on a synchronization signal block (SSB), a transmission configuration indication (TCI) state identifier (ID), or a sounding reference signal resource indicator (SRI).

In addition, to solve the problems above, a method performed by an integrated access and backhaul (IAB) node in a wireless communication system according to an embodiment of the disclosure may include receiving, from a base station, a message including information indicating a restricted beam which cannot be used for transmission or reception by a distributed unit (DU) of the IAB node, and performing, based on the information indicating the restricted beam, transmission or reception with a terminal or another IAB by using the DU.

In addition, the message may further include information on a beam to be used for data transmission or reception by a mobile termination (MT) of the IAB node.

In addition, the information indicating the restricted beam may include at least one of identification information on a CSI-RS or identification information on a SSB.

In addition, the information indicating the restricted beam may be applied in case that the IAB mode operates in a non-TDM mode.

In addition, the message may include a MAC CE.

In addition, the method may further include receiving information indicating a recommended beam of the IAB node to the base station.

In addition, the information indicating the recommended beam may include at least one of identification information on a channel state information reference signal (CSI-RS), identification information on a synchronization signal block (SSB), a transmission configuration indication (TCI) state identifier (ID), or a sounding reference signal resource indicator (SRI).

In addition, to solve the problems above, a base station in a wireless communication system according to an embodiment of the disclosure may include a transceiver and a controller coupled with the transceiver and configured to determine information indicating a restricted beam which cannot be used for transmission or reception by a distributed unit (DU) of an integrated access and backhaul (IAB) node connected to the base station, and transmit a message including the information indicating the restricted beam to the IAB node.

In addition, to solve the problems above, an integrated access and backhaul (IAB) node in a wireless communication system according to an embodiment of the disclosure may include a transceiver and a controller coupled with the transceiver and configured to receive, from a base station, a message including information indicating a restricted beam which cannot be used for transmission or reception by a distributed unit (DU) of the IAB node, and perform, based on the information indicating the restricted beam, transmission or reception with a terminal or another IAB by using the DU.

### [Advantageous Effects of Invention]

An embodiment of the disclosure may provide an IAB node beam management method and an IAB node operation method according thereto, and an apparatus therefor when an IAB node supports a multiplexing scheme (TDM or FDM and/or SDM).

Advantageous effects obtainable from the disclosure may not be limited to the above-mentioned effects, and other effects which are not mentioned may be clearly understood, through the following descriptions, by those skilled in the art to which the disclosure pertains.

### [Advantageous Effects of Invention]

FIG. 1 illustrates an example of a wireless communication system in which an integrated access and backhaul (IAB node) is managed according to an embodiment of the disclosure.
FIG. 2 schematically illustrates an example of multiplexing of resources between an access link and a backhaul link of an IAB node in a time domain and a frequency domain according to an embodiment of the disclosure.
FIG. 3 illustrates an example of multiplexing of resources between an access link and a backhaul link in an IAB node in a time domain according to an embodiment of the disclosure.
FIG. 4 illustrates an example of multiplexing of resources between an access link and a backhaul link in an IAB node in frequency and spatial domains according to an embodiment of the disclosure.
FIG. 5 schematically illustrates the structure of an IAB node according to an embodiment of the disclosure.
FIG. 6 illustrates a communication method for simultaneous transmission and reception between a mobile termination (MT) and a distributed unit (DU) within an IAB node in a wireless communication system according to an embodiment of the disclosure.
FIG. 7 illustrates a DU resource type for frequency division multiplexing (FDM) support of an IAB node and an operation of the IAB node in a wireless communication system according to an embodiment of the disclosure.
FIG. 8A illustrates a DU beam restriction method for spatial division multiplexing (SDM) support of an IAB node and an operation of the IAB node in a wireless communication system according to an embodiment of the disclosure.
FIG. 8B illustrates a DU beam restriction method for spatial division multiplexing (SDM) support of an IAB node and an operation of the IAB node in a wireless communication system according to an embodiment of the disclosure.
FIG. 9A illustrates a MT beam recommendation method for spatial division multiplexing (SDM) support of an IAB node and an operation of the IAB node in a wireless communication system according to an embodiment of the disclosure.
FIG. 9B illustrates a MT beam recommendation method for spatial division multiplexing (SDM) support of an IAB node and an operation of the IAB node in a wireless communication system according to an embodiment of the disclosure.
Part (a) of FIG. 10 illustrates an operation of a base station/parent IAB node in a wireless communication system according to an embodiment of the disclosure.
Part (b) of FIG. 10 illustrates an operation of an IAB node corresponding to a child IAB node in a wireless communication system according to an embodiment of the disclosure.

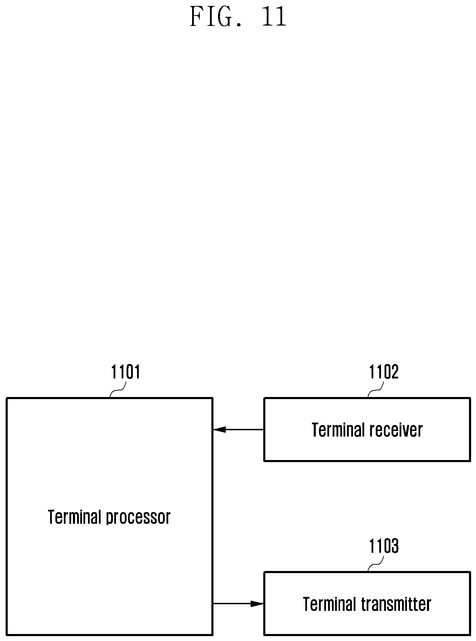

FIG. 11 illustrates a configuration of a terminal according to an embodiment of the disclosure.

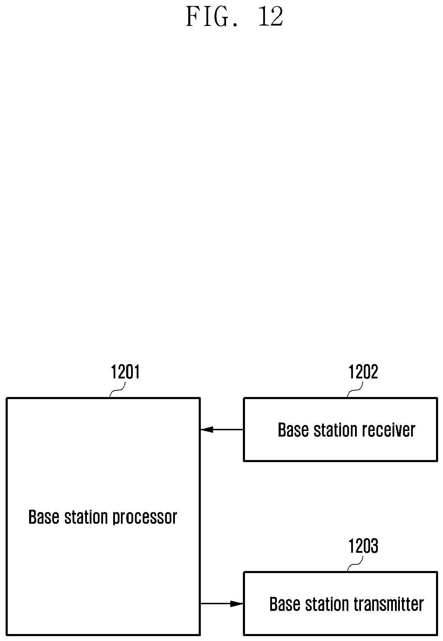

FIG. 12 illustrates a configuration of a base station according to an embodiment of the disclosure.

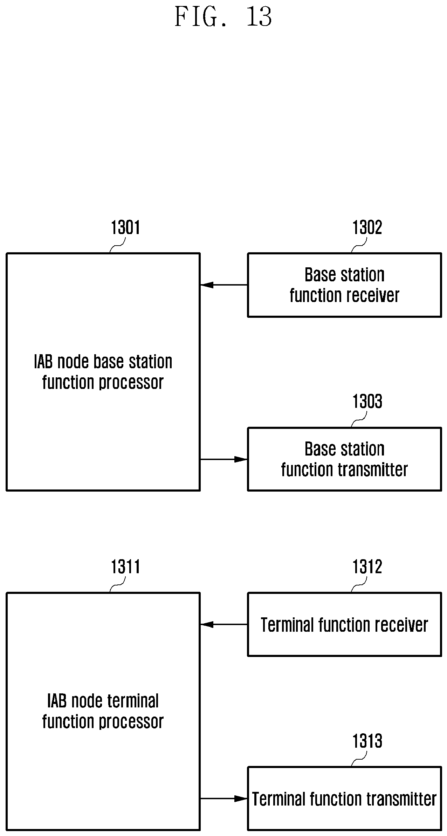

FIG. 13 illustrates a configuration of an IAB node according to an embodiment of the disclosure.

### [Mode for the Invention]

The terms used in the disclosure are only used to describe specific embodiments, and are not intended to limit the disclosure. A singular expression may include a plural expression unless they are definitely different in a context. Unless defined otherwise, all terms used herein, including technical and scientific terms, have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

In the following description, terms related to signals and messages (e.g., radio resource control (RRC) signaling. Message, signal, non-access stratum (NAS) message, and NAS signaling) are set forth based on the terms currently defined in the 3rd generation partnership project (3GPP) long term evolution (LTE) or new radio (NR) standards, but other terms having equivalent technical meanings may be used.

In the disclosure, various embodiments will be described using terms employed in some communication standards (e.g., LTE and NR defined by the 3GPP). A 3GPP mobile communication system discussed herein may cover both 4th generation (4G, hereinafter LTE) and 5th generation (5G, hereinafter NR) systems. However, the embodiments of the disclosure may also be easily applied to other communication systems through modifications.

As used in the disclosure, the expression "greater than" or "less than" is used to determine whether a specific condition is satisfied or fulfilled, but this is intended only to illustrate an example and does not exclude "greater than or equal to" or "equal to or less than". A condition indicated by the expression "greater than or equal to" may be replaced with a condition indicated by "greater than", a condition indicated by the expression "equal to or less than" may be replaced with a condition indicated by "less than", and a condition indicated by "greater than and equal to or less than" may be replaced with a condition indicated by "greater than and less than".

Hereinafter, exemplary embodiments of the disclosure will be described in detail with reference to the accompanying drawings. It should be noted that, in the drawings, the same or like elements are designated by the same or like reference signs as much as possible. Furthermore, a detailed description of known functions or configurations that may make the subject matter of the disclosure unclear will be omitted.

In describing the embodiments, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in the embodiments of the disclosure, the term "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card.

A wireless communication system is advancing to a broadband wireless communication system for providing high-speed and high-quality packet data services using communication standards, such as high-speed packet access (HSPA) of 3GPP, LTE {long-term evolution or evolved universal terrestrial radio access (E-UTRA)}, LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink indicates a radio link through which a user equipment (UE) (or a mobile station (MS)) transmits data or control signals to a base station (BS) (eNode B), and the downlink indicates a radio link through which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km2) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and requires a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and also requires a packet error rate of 10-5 or less. Therefore, for the services supporting URLLC, a 5G system must provide a transmit time interval (TTI) shorter than those of other services, and also requires a design for assigning a large number of resources in a frequency band in order to secure reliability of a communication link.

The three 5G services, that is, eMBB, URLLC, and mMTC, may be multiplexed and transmitted in a single system. In this case, different transmission/reception techniques and transmission/reception parameters may be used between services in order to satisfy different requirements of the respective services.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used below, and other terms referring to subjects having equivalent technical meanings may be used.

In the following description, the disclosure will be described using terms and names defined in the LTE and NR standards, which are the latest standards specified by the 3rd generation partnership project (3GPP) among the existing communication standards, for the sake of descriptive convenience. However, the disclosure is not limited by these terms and names, and may be applied in the same way to systems that conform other standards. In particular, the disclosure may be applied to the 3GPP NR (5th generation mobile communication standards).

In a 5G system, as a frequency band is increased (a 6 GHz band or higher specifically, a mmWave band), when a base station transmits and receives data to a terminal, coverage may be restricted due to attenuation of the propagation path. The above problem of the coverage restriction can be solved by closely arranging multiple relay nodes between the propagation path of the terminal and the base station, but the cost of installing an optical cable for backhaul connection between the relays becomes expensive. Therefore, instead of installing an optical cable between the relays, the broadband radio frequency resources available in mmWave are used to transmit and receive backhaul data between the relays, whereby the problem of cost associated with installation of an optical cable can be solved and the mmWave band can be used more efficiently.

As described above, the technology for transmitting and receiving backhaul data from a base station and finally transmitting and receiving access data to a terminal through one or more relaying nodes is called integrated access and backhaul (IAB), and in this case, the relaying node that transmits and receives data from the base station by using a wireless backhaul is called an IAB node. In this case, the base station (or may be referred to as a gNB, an IAB donor, etc.) includes a central unit (CU) and a distributed unit (DU), and the IAB node includes a distributed unit (DU) and a mobile termination (MT). The CU manages DUs of all IAB nodes connected to the base station through a multi-hop.

The IAB node uses the same frequency band or different frequency bands in a case of receiving backhaul data from the base station and transmitting access data to the terminal and a case of receiving access data from the terminal and transmitting backhaul data to the base station. When the same frequency band is used for access data reception and backhaul data transmission or access data transmission and backhaul data reception, the IAB node has a half-duplex constraint at one moment. Therefore, as a method for reducing the transmission/reception delay due to the half-duplex constraint of the IAB node, when transmitting a signal, the IAB node may perform multiplexing (for example, frequency division multiplexing (FDM) and/or spatial division multiplexing (SDM)) of backhaul data (for example, in a situation in which a parent IAB node, an IAB node operating as a relaying node, and a child node are connected through a wireless backhaul link is assumed, uplink data from an MT of the IAB node to a DU of the parent IAB node and downlink data from the DU of the IAB node to the MT of the child node) and access data to the terminal (downlink data from the IAB node to the terminal). For the relationship between the parent node and the child node of the IAB node, the 3GPP standard TS 38.300 section 4.7 Integrated Access and Backhaul may be referred to.

In addition, when receiving a signal, the IAB node may also perform multiplexing (FDM and/or SDM) of backhaul data (downlink data from the DU of the parent IAB node to the MT of the IAB node and uplink data from the MT of the child IAB node to the DU of the IAB node) and access data from the terminal (uplink data from the terminal to the IAB node).

In this case, when the multiplexing scheme (TDM or FDM and/or SDM) is supported, an IAB node bean management method for coordination between the IAB node and the parent IAB node and operations of the DU and the MT of the IAB node which uses a beam during simultaneous transmission and reception through the DU and the MT of the IAB node need to be standardization. Hereinafter, in embodiments of the disclosure, the IAB node beam management method and the IAB node operation according thereto when the multiplexing scheme (TDM or FDM and/or SDM) is supported are provided.

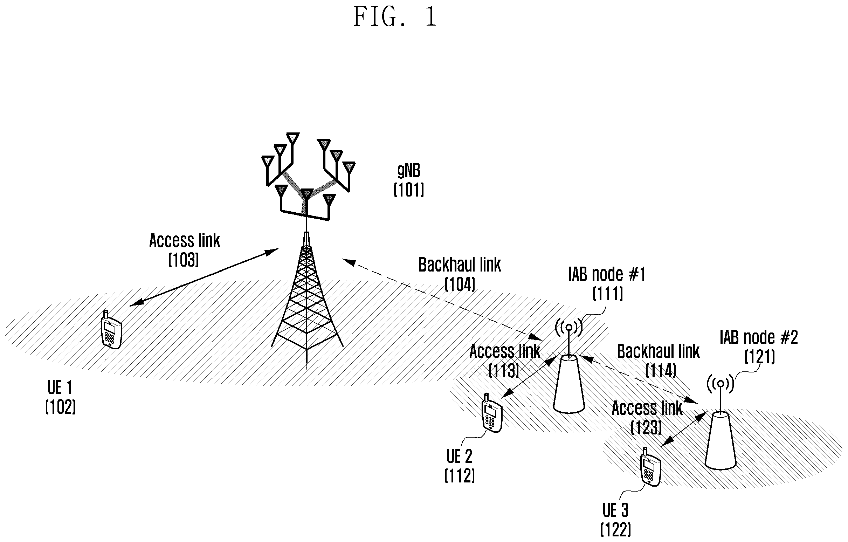

FIG. 1 illustrates an example of a wireless communication system in which an IAB node is managed according to an embodiment of the disclosure.

Referring to FIG. 1, a gNB 101 is a normal base station (for example, an eNB or a gNB), and may be referred to as a gNB, an eNB, a base station, a donor base station, or a donor IAB in the disclosure. An IAB donor may mean an entity for serving an IAB node so that an IAB node to be described below is connected to a core network (e.g., an evolved packet core (EPC) or a 5G core (5GC)). The IAB donor, as a base station, is a network infrastructure for providing wireless access to a terminal. A base station 101 has coverage defined as a predetermined geographical area, based on the distance in which a signal can be transmitted. Hereinafter, the term "coverage" used below may indicate a service coverage area of a base station 110. The base station 101 may cover one cell, or may cover multiple cells. Here, the multiple cells may be distinguished by a supported frequency and an area of a covered sector.

The base station 101 performing a role of an IAB donor may be referred to as, in addition to the gNB, an access point (AP), an evolved node B (eNodeB or eNB), a 5^{th} generation (5G) node, a 5G NodeB (NB), a next generation node B (gNB), a wireless point, a transmission/reception point (TRP), or other terms having the equivalent technical meaning. In addition, in a case of distributed deployment, the base station 101 may be referred to as a centralized unit (CU), a distributed unit (DU), a digital unit (DU), a radio unit (RU), a remote radio head (RRH), or other terms having the equivalent technical meaning. In FIG. 1, the IAB doner, as the gNB 101, is illustrated as one entity, but may be implemented as distributed entities according to an embodiment. For example, the IAB donor may function by being divided into a CU and a DU.

IAB node #1 111 and IAB node #2 121 are IAB nodes for transmitting or receiving signals through a backhaul link. The IAB nodes 111 and 112 are network entities for wireless access and backhaul connection and may be arranged to extend coverage. Through wireless backhaul connection, coverage of the gNB 101 corresponding to the IAB donor can be increased without installation of a wired network. For example, IAB node #1 111 may be disposed around the gNB 101 corresponding to the IAB donor (e.g., within the radius of wireless communication). IAB node #1 111 may be connected to the gNB 101 corresponding to an IAB donor via a backhaul link to perform communication and perform communication with terminal 2 112 via a wireless link. In addition, IAB node #2 121 may be disposed around IAB node #1 111 corresponding to a different node (e.g., within the radius of wireless communication). The deployment of each of the IAB nodes 111 and 121, coverage increase can be achieved in a high-frequency band (e.g., a millimeter-wave band). Each of the IAB nodes 111 and 121 may perform not only a multi-hop but also a relay technology or a function of a repeater.

The IAB nodes 111 and 121 may be connected to a parent node and a child node. For example, for IAB node #1 111, the gNB 101 may be referred to as a parent node, and IAB node #2 121 or terminal 2 112 may be referred to as a child node. In addition, for IAB node #2 121, IAB node #1 111 may be referred to as a parent node, and terminal 3 122 may be referred to as a child node. A link between the IAB node and the parent node is referred to as a parent link, and a link between the IAB node and the child node is referred to as a child link.

A terminal (e.g., terminal 1 101, terminal 2 112, or terminal 3 122) is a device used by a user, and performs communication with the base station 101 or the IAB node 111 or 121 via a wireless channel. Hereinafter, the wireless channel between the terminal 102, 112, or 122 and the base station 101 or between the terminal 102, 112, or 112 and the IAB node 111 or 121 is referred to as an access link. In the disclosure, the terminal 102, 112, or 122 may include not only an electronic device used by a normal user but also a device for performing machine-type communication (MTC), which can be operated without involvement of a user, in some cases. The terminal 102, 112, or 122 may be referred to as, in addition to a terminal, a user equipment (UE), a mobile station, a subscriber station, a customer premises equipment (CPE), a remote terminal, a wireless terminal, an electronic device, a terminal for vehicle, a user device, or other terms having the equivalent technical meaning.

Terminal 1 102 may transmit or receive access data via an access link 103. IAB node #1 111 may transmit or receive backhaul data to or from the gNB 101 via a backhaul link 104. Terminal 2 112 may transmit or receive access data to or from IAB node #1 111 via an access link 113. IAB node #2 121 may transmit or receive backhaul data to or from IAB node #1 111 via a backhaul link 114. Accordingly, IAB node #1 111 is a higher IAB node of IAB node #2 121, and is also referred to as a parent IAB node, and IAB node #2 121 is a lower IAB node of IAB node #1 111, and is referred to as a child IAB node. Terminal 3 122 transmits or receives access 123 to or from IAB node #2 121 via an access link 123. In FIG. 1, the backhaul link 104 or 114 may use a wireless backhaul link.

Hereinafter, in the disclosure, measurement for a donor gNB or an IAB node of a terminal is described.

For terminal 2 112 or terminal 3 122 to perform measurement for the IAB nodes 111 and 121 or the neighboring donor gNB 101 rather than the serving IAB nodes 111 and 121, coordination between the donor gNB 101 and the IAB nodes 111 and 121 may be required. That is, the donor gNB 101 may match measurement resources of an IAB node having an even-number hop order or measurement resources of an IAB node having an odd-number hop order, to minimize waste of resources for performing measurement of the IAB base station or the neighboring IAB node by the terminals 112 and 122. The terminals 112 and 122 may receive, from the serving IAB nodes 111 and 121 or the base station 101 via higher-layer signaling (higher-layer signal (e.g., radio resource control (RRC)) signaling)), configuration information indicating to measure a synchronization signal block (SSB)/physical broadcast channel (PBCH) or a channel state information reference signal (CSI-RS) for measurement of the neighboring IAB node. If the terminals 112 and 122 receive configuration of measurement of a neighboring base station through an SSB/PBCH, in the terminal terminals 112 and 122, at least two SSB/PBCH measurement timing configurations (SMTCs) may be configured for each frequency for measurement resources of the IAB node having the even-number hop order or measurement resources of the IAB node having the odd-number hop order. The terminals 112 and 122 having received the configuration information may perform measurement of the IAB node having the even-number hop order in one SMTC, and may perform measurement for the IAB node having the odd-number hop order in the other SMTC.

Hereinafter, in the disclosure, measurement of other IAB nodes by the IAB node or donor gNBs is described.

For one IAB node to perform measurement for a donor gNB or an IAB node in other neighbors, coordination between the donor gNB and the IAB nodes may be required. That is, the donor gNB may match measurement resources of an IAB node having an even-number hop order or measurement resources of an IAB node having an odd-number hop order, to minimize waste of resources for performing measurement of the IAB base station or the neighboring IAB node by one IAB node. One IAB node may receive, from the serving IAB node or the base station via higher-layer signaling (e.g., radio resource control (RRC) signaling), configuration information indicating to measure a synchronization signal block (SSB)/physical broadcast channel (PBCH) or a channel state information reference signal (CSI-RS) for measurement of the neighboring IAB node. If the IAB node receives configuration of measurement of a neighboring base station through an SSB/PBCH, in IAB node, at least two SSB/PBCH measurement timing configurations (SMTCs) may be configured for each frequency for measurement resources of the IAB node having the even-number hop order or measurement resources of the IAB node having the odd-number hop order. The IAB node having received the configuration information may perform measurement of the IAB node having the even-number hop order in one SMTC, and may perform measurement of the IAB node having the odd- number hop order in the other SMTC.

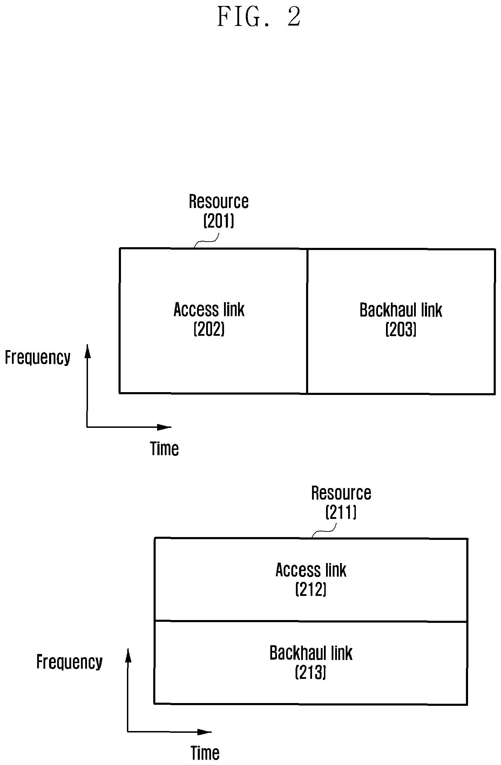

Hereinafter, in an IAB technology proposed in the disclosure, multiplexing of a backhaul link between a base station and an IAB node or an IAB node and an IAB node and an access link between a base station and a terminal or an IAB node and a terminal within a radio resource is described in detail with reference to FIGS. 2, 3, and 4.

FIG. 2 schematically illustrates an example of multiplexing of resources between an access link and a backhaul link in an IAB node according to an embodiment of the disclosure.

Referring to FIG. 2, part (a) of FIG. 2 illustrates an example of multiplexing of resources between an access link and a backhaul link in an IAB node in a time domain. Part (b) of FIG. 2 illustrates an example of multiplexing of resources between an access link and a backhaul link in an IAB node in a frequency domain.

Part (b) of FIG. 2 illustrates an example of time domain multiplexing or time division multiplexing (TDM) of a backhaul link 203 between a base station and an IAB node or an IAB node and an IAB node and an access link 202 between a base station and a terminal or an IAB node and a terminal within a radio resource 201.

As in part (a) of FIG. 2, when resources are multiplexed between an access link and a backhaul link in an IAB node in a time domain, data transmission or reception is not performed between the base station and the IAB nodes in a time domain in which the base station or the IAB node transmits or receives data to or from the terminal. In addition, when resources are multiplexed between an access node and a backhaul link in an IAB node in a time domain, the base station or the IAB node does not transmit or receive data to or from the terminal in a time domain in which data is not transmitted or received between the base station and the IAB nodes.

Part (b) of FIG. 2 illustrates an example of frequency domain multiplexing or frequency division multiplexing (FDM) of a backhaul link 213 between a base station and an IAB node or an IAB node and an IAB node and an access link 212 between a base station and a terminal or an IAB node and a terminal in a radio resource 211. Accordingly, data can be transmitted or received between the base station and the IAB nodes in the time domain in which the base station or the IAB node transmits or receives data to or from the terminal. However, data transmission in the same direction is only possible due to the half-duplex constraints of IAB nodes. For example, in a time domain in which a first IAB node receives data from a terminal, the first IAB node may receive only backhaul data from another IAB node or a base station. In addition, in a time domain in which a first IAB node transmits data to a terminal, the first IAB node may transmit only backhaul data to another IAB node or a base station.

In FIG. 2, only TDM and FDM are described from among multiplexing techniques, but spatial domain multiplexing or spatial division multiplexing (SDM) between an access link and a backhaul link is possible. Accordingly, the access link and the backhaul link can be transmitted or received at the same time through the SDM, but as in FMD in part (b) of FIG. 2, data transmission in the same direction is only possible also in the SDM due to the half-duplex constraints of the IAB nodes. For example, in a time domain in which a first IAB node receives data from a terminal, the first IAB node may receive only backhaul data from another IAB node or a base station. In addition, in a time domain in which a first IAB node transmits data to a terminal, the first IAB node may only transmit backhaul data to another IAB node or the base station.

Information on a multiplexing technique to be used from among the TDM, FDM, and SDM may be transferred between an IAB node and a base station or a higher IAB node in various ways. According to embodiments, when an IAB node performs initial access to a base station or a higher IAB node, the IAB node may transmit capability information of the multiplexing technique to the base station or the higher IAB node (for example, a parent IAB node). Alternatively, according to embodiments, an IAB node may then receive, from the corresponding base station or the higher-layer IAB nodes through system information, high-layer signaling information (higher-layer signal) such as radio resource control (RRC) information, and a medium access control (MAC) control element (CE), information on a multiplexing technique to be used.

Alternatively, according to embodiments, an IAB node may also receive information on a multiplexing technique to be used from the base station or the higher IAB nodes through a backhaul link after the initial access. Alternatively, according to embodiments, a multiplexing technique to be used after an IAB node transmits the capability information to the base station or the higher IAB node may be implementation of the IAB node, and the IAB node may also report a multiplexing technique to be used during a specific slot or radio frame or a specific interval or to be used continuously to the base station or the higher IAB nodes through backhaul or higher-layer signaling information.

The multiplexing technique between the access link and the backhaul link is mainly described in FIG. 2, but the same method as in the multiplexing between the access link and the backhaul link may be used for multiplexing between a backhaul link and a backhaul link. For example, multiplexing between a (backhaul link) of a mobile termination (MT) and a (backhaul link or access link) of a DU within one IAB node, to be described below, is possible in a scheme described in the example of FIG. 2.

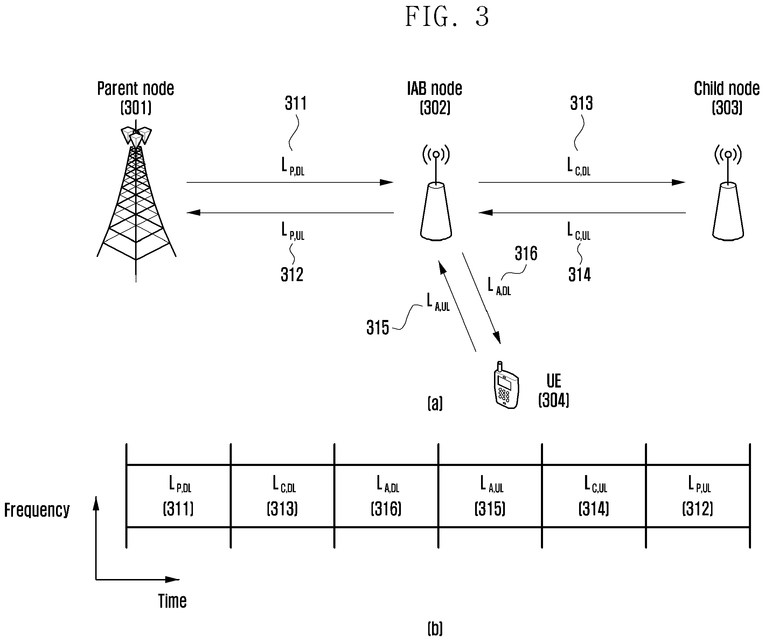

FIG. 3 illustrates an example of multiplexing of resources between an access link and a backhaul link in an IAB node in a time domain according to an embodiment of the disclosure.

Referring to FIG. 3, part (a) of FIG. 3 illustrates a process of communicating with a parent node 301, a child node 303, and a terminal 304 by an IAB node 302. To describe a link between respective nodes in more detail, the parent node 301 may transmit a backhaul downlink signal to the IAB node 302 in a backhaul downlink L_{P,DL} 311. The IAB node 302 may transmit a backhaul uplink signal to the parent node 301 in a backhaul uplink L_{P,UL} 312. The IAB node 302 may transmit an access downlink signal to the terminal 304 in an access downlink L_{A,DL} 316. The terminal 304 may transmit an access uplink signal to the IAB node 302 in an access uplink L_{A,UL} 315. The IAB node 302 may transmit a backhaul downlink signal to the child IAB node 303 in a backhaul downlink L_{C,DL} 313, and the child IAB node 303 may transmit a backhaul uplink signal to the IAB node 302 in a backhaul uplink L_{C,UL} 314. In the example above in FIG. 3, subscript P denotes a backhaul link with a parent node, subscript A denotes an access link with a terminal, and subscript C denotes a backhaul link with a child node.

A link relationship in FIG. 3 is described with reference to the IAB node 302, a parent node is the IAB node 302 for the IAB child node 303, and there may be another IAB child node for the IAB child node 303. In addition, a child node is the IAB node 302 for the parent node 301, and there may be another IAB parent node for the parent node 301.

In the description above, the backhaul uplink/downlink signal and the access uplink/downlink signal may include at least one of data and control information, a channel for transmitting data and control information, a reference signal required to decode data and control information, or reference signals for notifying of channel information.

Part (b) of FIG. 3 illustrates an example of multiplexing of all of the links in a time domain. In the example of FIG. 3, the backhaul downlink L_{P,DL} 311, the backhaul downlink L_{C,DL} 313, the access downlink L_{A,DL} 316, the access uplink L_{A,UL} 315, the backhaul uplink L_{C,UL} 314, and the backhaul uplink L_{P,UL} 312 are multiplexed in a time sequence. The order relationship between links provided in the example of FIG. 3 is an example, and any order relationships are applicable regardless of a certain order relationship.

The links are multiplexed in the time domain in the time sequence, and thus such a time division scheme may be identified as a multiplexing scheme in which it takes the longest time to transmit a signal from the parent node 301 to the child IAB node 303 through the IAB node 302 and also transmit the signal to the terminal. Accordingly, as a method for reducing time latency in transmitting a signal from the parent node 301 to the final terminal, a method for multiplexing a backhaul link and a backhaul link or a backhaul link and access links in a frequency domain or in a spatial domain and transmitting the same at the same time point be considered.

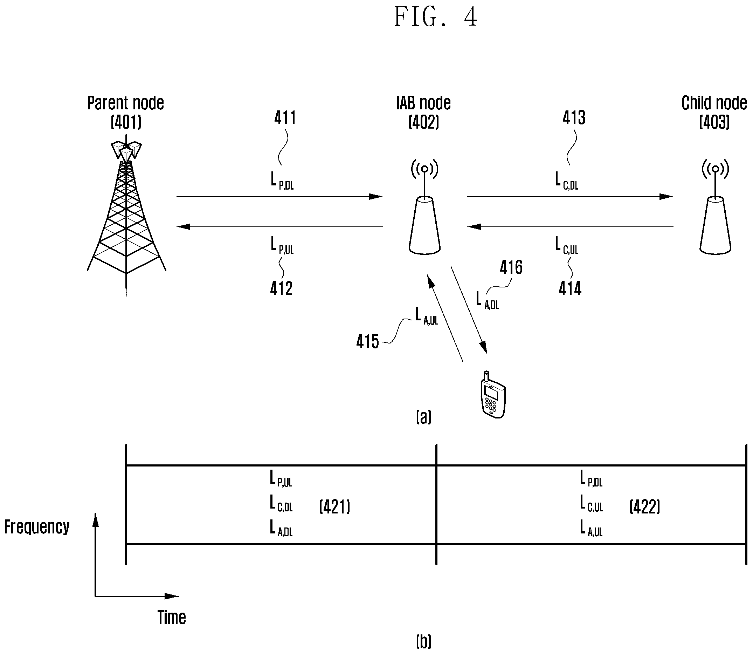

FIG. 4 illustrates an example of multiplexing of resources between an access link and a backhaul link in an IAB node in frequency and spatial domains according to an embodiment of the disclosure.

In FIG. 4, a method for reducing time latency by multiplexing a backhaul link and a backhaul link or a backhaul link and access links in a frequency domain or in a spatial domain is described.

Referring to FIG. 4, similar to FIG. 3, part (a) of FIG. 4 illustrates a process of communicating with a parent node 401, a child IAB node 403, and a terminal 404 by an IAB node 402. To describe a link between respective nodes in more detail, the parent node 401 may transmit a backhaul downlink signal to the IAB node 402 in a backhaul downlink L_{P,DL} 411. The IAB node 402 may transmit a backhaul uplink signal to the parent node 401 in a backhaul uplink L_{P,UL} 412. The IAB node 402 may transmit an access downlink signal to the terminal 404 in an access downlink L_{A,DL} 416, and the terminal 404 may transmit an access uplink signal to the IAB node 402 in an access uplink L_{A,UL} 415. The IAB node 402 may transmit a backhaul downlink signal to the child IAB node 403 in a backhaul downlink L_{C,DL} 413, and the IAB child node 403 may transmit a backhaul uplink signal to the IAB node 402 in a backhaul uplink L_{C,UL} 414. In the example above in FIG. 4, subscript P denotes a backhaul link with a parent node, subscript A denotes an access link with a terminal, and subscript C denotes a backhaul link with a child node.

A link relationship in FIG. 4 is described with reference to the IAB node 402, a parent node is the IAB node 402 for the IAB child node 403, and there may be another IAB child node for the IAB child node 403. In addition, a child node is the IAB node 402 for the parent node 401, and there may be another IAB parent node for the parent node 401.

In the description above, the backhaul uplink/downlink signal and the access uplink/downlink signal may include at least one of data and control information, a channel for transmitting data and control information, a reference signal required to decode data and control information, or reference signals for notifying of channel information.

Part (b) of FIG. 4 illustrates an example of multiplexing in a frequency domain or a spatial domain.

As described above, the IAB node 402 has a half-duplex constraint at one time, and thus signals for multiplexing in the frequency domain or multiplexing in the spatial area are limited. In consideration of the half-duplex constraints of the IAB node 402, as a link which can be multiplexed in the time domain in which the IAB node 402 can perform transmission, there may be the backhaul uplink L_{P,UL} 412, the backhaul downlink L_{C,DL} 413, and the access downlink L_{A,DL} 416. Accordingly, when the links (i.e., the backhaul uplink L_{P,UL} 412, the backhaul downlink L_{C,DL} 413, and the access downlink L_{A,DL} 416) are multiplexed in the frequency domain or the spatial domain, the IAB node 402 may transmit all the links in the time domain as in the resource domain 421. In addition, as a link which can be multiplexed in the time domain in which the IAB node 402 can perform reception, there may be the backhaul downlink L_{P,DL} 411, the backhaul uplink L_{C,UL} 414, and the access downlink L_{A,UL} 415. Accordingly, when the links (i.e., the backhaul downlink L_{P,DL} 411, the backhaul uplink L_{C,UL} 414, and the access downlink L_{A,UL} 415) are multiplexed in the frequency domain or the spatial domain, the IAB node 402 may receive all the links in the time domain as in the resource domain 422.

The multiplexing of the links provided in the embodiment of FIG. 4 is an example, only two links among three links multiplexed in the frequency or spatial domain may be multiplexed. That is, the IAB node may multiplex some of the links which can be multiplexed, so as to transmit/receive a signal.

Next, the structure of an IAB node is described.

In a 5G system, in order to support various services such as large-capacity transmission, low-latency, high-reliability, or large-volume IoT devices, and reduce communication network installation costs (capital expenditure (CAPEX)), various types of base station structures that are optimal for service requirements have been studied. In a 4G LTE system, in order to reduce CAPEX and effectively handle interference control, a cloud RAN (C-RAN) structure in which a data processing unit of a base station and a radio transmission/reception unit (or remote radio head (RRH)) are separated, the data processing unit is processed at the center, and only the wireless transmission/reception unit is placed at a cell site has been commercialized. In the C-RAN structure, when transmitting baseband digital in-phase quadrature (IQ) data from a base station data processing unit to a wireless transmission/reception unit, an optical link conforming to the Common Public Radio Interface (CPRI) standard is generally used. When data is transmitted to such a wireless transmission/reception unit, a high data transmission rate is required. For example, a 614.4 Mbps data transmission rate is required when sending 10 MHz Internet protocol (IP) data, and a 1.2 Gbps data transmission rate is required when sending 20 MHz IP data. Therefore, in the 5G RAN structure, the base station is divided into a central unit (CU) and a distributed unit (DU) in order to reduce the enormous load of the optical link, and a functional split is applied to the CU and DU to realize various structures. In 3GPP, standardization of various functional split options between the CU and the DU is being performed, and options for a functional split are divided by function between protocol layers or within a protocol layer, and there are a total of 8 options from option 1 to option 8. Among the options, options 2 and 7 are first considered structures in the current 5G base station structure. In option 2, RRC and packet data convergence protocol (PDCP) are located in the CU, and radio link control (RLC), medium access control (MAC), a physical (PHY) layer, and a radio frequency (RF) are located in the DU. In option 7, RRC, PDCP, RLC, MAC, and the higher physical layer are located in the CU, and the lower physical layer is located in the DU. It is possible to have a structure having deployment flexibility which allows NR network protocols to be separated and moved between the CU and the DU through the functional split as described above. Through such a structure, flexible hardware implementation provides a cost-effective solution, and the separation structure between the CU and the DU enables adjustment of load management, real-time performance optimization, and network functions virtualization (NFV)/software-defined networking (SDN), and such a configurable functional split has an advantage of applicability to various applications (variable latency in transmission).

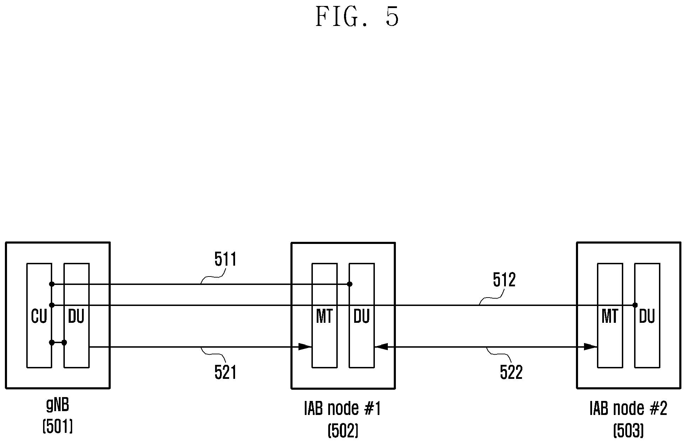

Accordingly, the above-described structure of the IAB node in consideration of the function split is described with reference to FIG. 5.

FIG. 5 schematically illustrates the structure of an IAB node according to an embodiment of the disclosure.

Referring to FIG. 5, a gNB 501 includes a CU and DU, and each of IAB nodes 502 and 503 includes a terminal function (hereinafter, referred to as an MT) for transmitting and receiving data on a parent node and a backhaul link, and a base station function (hereinafter, referred to as a DU) for transmitting and receiving data on a child node and a backhaul link. In FIG. 5, IAB node #1 502 is wirelessly connected to the gNB 501 over one hop, and IAB node #2 503 is wirelessly connected to the gNB 501 over two hops through IAB node #1 502.

As shown in FIG. 5, the CU of the gNB 501 may control (511 and 512) not only the DU of the gNB 501 but also all IAB nodes wirelessly connected to the gNB 501, i.e., the DUs of IAB node #1 502 and IAB node #2 503. The CU may allocate a radio resource to the DU (at least one of the DU of the gNB 501, the DU of IAB node #1 502, and the DU of IAB node #2 503) so that the DU can transmit and receive data to or from the MT of the IAB node in a lower layer of the DU. The allocation of the radio resource may be transmitted to the DU through system information, a higher-layer signal such as RRC information, or a physical signal by using an F1 application protocol (F1AP) interface. The F1AP may refer to the 3GPP TS 38.473 standard. In this case, the radio resource may include a downlink time resource, an uplink time resource, a flexible time resource, and the like.

Hereinafter, the radio resource configuration for TDM will be described in detail based on IAB node #2 503. Specifically, the radio resource configuration according to embodiments of the disclosure is applicable when resources are multiplexed between an access link and a backhaul link in the IAB node of FIG. 3 within one carrier in a time domain. In addition, the radio resource configuration according to embodiments of the disclosure is also applicable when a backhaul link and a backhaul link or a backhaul link and access links are multiplexed in a frequency domain of different carriers.

The downlink time resource is a resource for transmitting downlink control/data and signals to the MT of the lower IAB node by the DU of IAB node #2 503. The uplink time resource is a resource for receiving uplink control/data and signals from the MT of the lower IAB node by the DU of IAB node #2 503. The flexible time resource is a resource that can be used as a downlink time resource or an uplink time resource by the DU, and how the flexible time resource will be used may be indicated to the MT of the lower IAB node through the downlink control signal of the DU. The MT of the lower IAB node having received the downlink control signal determines whether the flexible time resource is to be used as a downlink time resource or an uplink time resource. When the downlink control signal has failed to be received, the MT of the lower IAB node does not perform a transmission/reception operation. That is, the MT does not monitor or decode the downlink control channel in the resource, or does not measure a signal from the resource. The MT does not perform a transmission/reception operation in the resource. That is, the MT does not monitor or decode the downlink control channel in the resource, or does not measure a signal from the resource.

For the downlink time resource, uplink time resource, and flexible time resource, two different types (or three different types including the time resource that is not always available) of resources may be indicated from the CU of the gNB 501 to the DU.

The first type is a soft type, and the CU of the gNB 501 may configure a soft-type downlink time resource, an uplink time resource, and a flexible time resource to the DU of IAB node #2 503 by using F1AP (an interface between the CU and the DU). In this case, for the configured soft-type resources, IAB node #1 502, which is a parent IAB (or the DU of the parent IAB) of IAB node #2 503, may explicitly (e.g., by a DCI format) or implicitly indicate whether the resource is available or not available to IAB node #2 503, which is a child IAB (or the DU of the child IAB). That is, when it is indicated to IAB node #2 503 (or the DU of IAB node #2 503) that a specific resource is available by IAB node #1 502 (or the DU of IAB node #1 502), the DU of IAB node #2 503 may utilize the resource for data transmission/reception with the MT of the lower IAB node. That is, the DU of IAB node #2 503 may perform transmission in a case of a downlink resource or may perform reception in a case of an uplink resource by using the resource. If it is indicated that the resource is not available, IAB node #2 503 cannot use the resource for data transmission/reception with the MT of the lower IAB node. That is, the DU of IAB node #2 503 cannot perform transmission or reception using the resource.

A method of indicating the availability of the soft-type resource by a downlink control information (DCI) format will be described in more detail. The DCI format in such an embodiment may include an availability indicator for indicating the availability of one or more consecutive uplink, downlink, or flexible symbols.

In order to receive DCI according to the DCI format, IAB node #2 503 may receive information on one or more of location information of an availability indicator indicating the availability of IAB node #2 503, a table indicating the availability of time resources corresponding to multiple slots, and a mapping relation of the availability indicators from the DCI format by a higher-layer signal from the CU or parent IAB along with a cell identification (ID) of the DU of IAB node #2 503 in advance. A value (or indicator) indicating the availability of consecutive uplink symbols, downlink symbols, or flexible symbols within one slot, and the meaning of the value (or indicator), may be configured as shown in Table 1 below.

**[Table 1]**

| Value | Indication |
|---|---|
| 0 | No indication of availability for soft symbols |
| 1 | DL soft symbols are indicated available |
| | No indication of availability for UL and Flexible soft symbols |
| 2 | UL soft symbols are indicated available |
| | No indication of availability for DL and Flexible soft symbols |
| 3 | DL and UL soft symbols are indicated available |
| | No indication of availability for Flexible soft symbols |
| 4 | Flexible soft symbols are indicated available |
| | No indication of availability for DL and UL soft symbols |
| 3 | DL and flexible soft symbols are indicated available |
| | No indication of availability for UL soft symbols |
| 6 | UL and Flexible soft symbols are indicated available |
| | No indication of availability for DL soft symbols |
| 7 | DL, UL, and Flexible soft symbols are indicated available |

When the above availability indicator is indicated from the parent IAB to IAB node #2 503 by the DCI format and IAB node #2 receives the indication, the following method may be considered as a method for interpreting, by the DU of IAB node #2 503, the relationship between the downlink, uplink, or flexible time resource configured for the IAB DU by the CU and the above-described availability.

A first method is a method in which the number of values indicating the availability included in the availability indicator included in the DCI format by the IAB DU is expected to be matched to the number of slots including the soft-type resource including consecutive symbols configured by the CU. According to this method, the IAB DU may determine that the availability is applied only to a slot including the soft-type resource.

A second method is a method in which the number of values indicating the availability included in the availability indicator included in the DCI format by the IAB DU is expected to be matched to the number of all slots configured by the CU, that is, the number of all slots including the hard/soft/non-available (NA) type resource. Meanwhile, in such an embodiment, the IAB DU may determine that the availability is applied only to a slot including the soft-type resource, and may determine that the indicated availability is not applied to a slot including only the hard or NA type resource, without the soft-type resource.

In the first and second methods, the IAB DU may expect the value indicating the availability and the downlink resource, uplink resource, or flexible resource configured by the CU are matched to each other. For example, when only a downlink soft resource or a downlink hard resource exists in a slot, the IAB DU may also expect that only the value of 1 can be indicated in Table 1 above. Therefore, the IAB DU may expect that values including the availability of uplink soft resources among the values in Table 1 above are not indicated.

In addition, the IAB DU may determine that it is also possible to indicate whether a downlink resource or an uplink resource is available in addition to a value indicating that the flexible resource is available in the flexible resource configured by the CU. For example, in a case of a flexible soft resource or a flexible hard resource, the DU of the IAB node may expect that a value of 1 or 2 instead of the value of 4 in Table 1 above is possible. In this case, the DU of IAB node #2 503 may determine that the flexible resource can be used only as an uplink or downlink resource by the indication of the parent IAB, instead of using the flexible resource is used as an uplink or downlink resource upon the determination of IAB node #2 503.

In addition, the IAB DU may expect that a value of 0 can be indicated in Table 1 above in any hard/soft or NA resource configured by the CU. In this case, the IAB DU determines that resource utilization is not possible in the hard/soft resources previously configured by the CU, and assumes, until it is later indicated by the DCI format that the resource is available, that the resource is not available for the DU of IAB node #2 503 to perform data transmission or reception to or from the MT of the lower IAB node, as in the case of an always unavailable resource type configured by the CU. Thereafter, when it is indicated again by the DCI format that the resource is available, the DU of IAB node #2 503 may utilized the resource as configured by the CU and received by the DCI format.

The second type of resource is a hard-type resource, and the above resources are always utilized between the DU and the MT. That is, the DU of IAB node #2 503 may perform transmission when the resource is a downlink time resource, and may perform reception when the resource is an uplink resource, regardless of the transmission/reception operation of the MT of IAB node #2. When the resource is a flexible resource, transmission or reception is performed according to the determination of the IAB DU (that is, to match to the DCI format indicating, to the MT of the lower IAB node, whether the flexible resource is a downlink resource or an uplink resource).

The third type of resource is a type of resource that is always not available (always unused or always unavailable), and the above resources are not available when the DU of IAB node #2 503 performs data transmission and reception to or from the MT.

The above types of resources may be received together when a downlink time resource, an uplink time resource, a flexible time resource, and a reserved time resource are received from the CU to the DU through a higher-layer signal.

Referring to FIG. 5, the DU of the gNB 501 performs a typical base station operation, and the DU controls the MT of IAB node #1 502 to perform scheduling data can be transmitted and received (operation 521). The DU of IAB node #1 502 performs a typical base station operation, and the DU controls the MT of IAB node #2 503 to perform scheduling so that data can be transmitted and received (operation 522).

According to an embodiment, the DU may indicate a radio resource so that data can be transmitted and received to or from the MT of the lower IAB node, based on the radio resource allocated from the CU. The configuration of the radio resource may be transmitted to the MT through system information, a higher-layer signal, or a physical signal. In this case, the radio resource may include a downlink time resource, an uplink time resource, a flexible time resource, a reserved time resource, and the like. The downlink time resource is a resource for transmitting, by the DU, downlink control/data and signals to the MT of the lower IAB node. The uplink time resource is a resource for receiving, by the DU, uplink control/data and signals from the MT of the lower IAB node. The flexible time resource is a resource that can be used as a downlink time resource or an uplink time resource by the DU, and how the flexible time resource will be used may be indicated to the MT of the lower IAB node by the downlink control signal of the DU. The MT having received the downlink control signal determines whether the flexible time resource is to be used as a downlink time resource or an uplink time resource. When the downlink control signal has failed to be received, the MT does not perform a transmission/reception operation. That is, the MT does not monitor or decode the downlink control channel in the resource, or does not measure a signal in the resource.

The downlink control signal may be signaled to the MT by a combination of a higher-layer signal and a physical signal, and the MT may determine a slot format in a specific slot by receiving the signaling. The slot format may be basically configured so as to start with a downlink symbol as a start, have a flexible symbol located in the middle, and end with an uplink symbol at the end (for example, a structure having the sequence of D-F-U). When using only the above slot format, the DU of the IAB node may perform downlink transmission at the beginning of the slot, but the MT of the IAB node is configured only with the above slot format (i.e., D-F-U structure) from the parent IAB, and accordingly, uplink transmission cannot be performed at the same time (corresponding to slot format indices 0 to 55 in Table 2 below). Therefore, an example of a slot format configured to start with an uplink symbol, have a flexible symbol in the middle, and end with a downlink symbol may be shown in [Table 2] below (corresponding to slot format indices 56 to 96 in [Table 2] below). The slot format shown in Table 2 is transmitted to the MT by using the downlink control signal, and may be configured to the DU from the CU by using the F1AP.

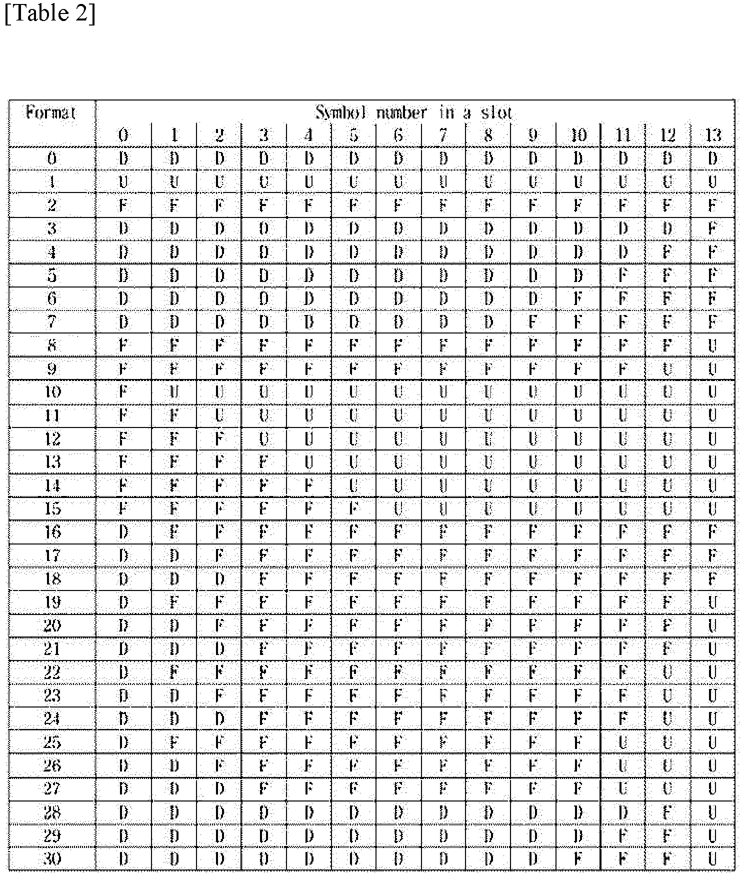

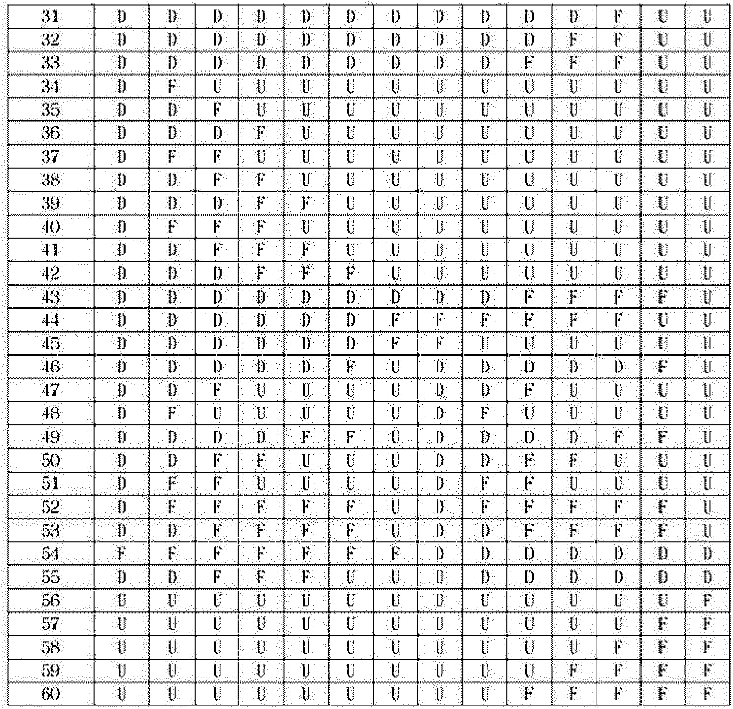

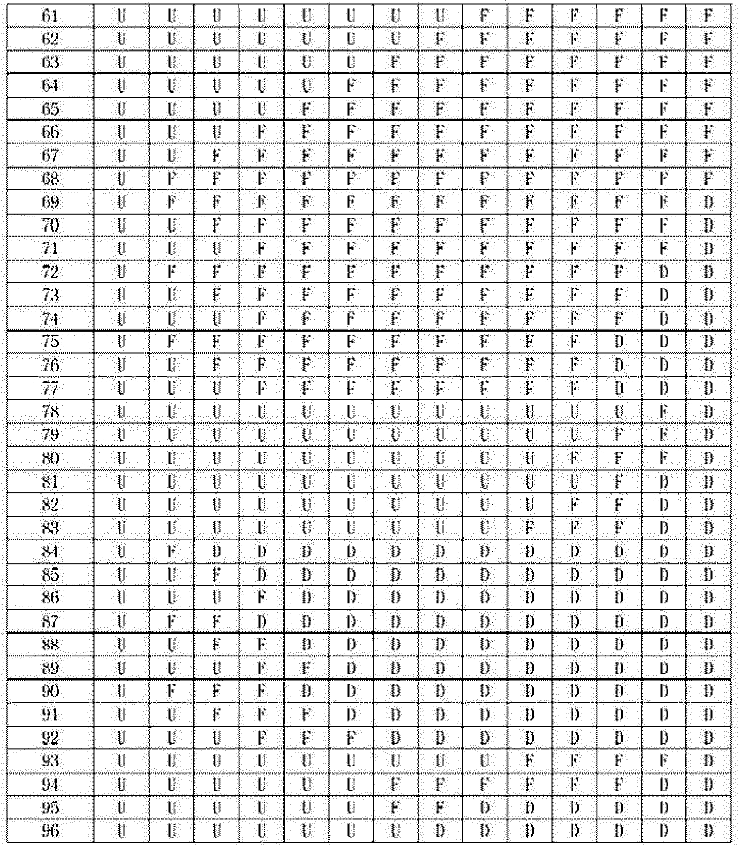

The reserved time resource (e.g., 97 to 254) is a resource in which the DU cannot transmit or receive data to or from the lower MU, and the MT does not perform a transmission/reception operation in the resource. That is, the MT does not monitor or decode the downlink control channel in the resource, or does not measure a signal in the resource.

Accordingly, the MT in one IAB node is controlled by the DUs in the higher IAB nodes to receive scheduling information and transmit and receive data, and the DUs in the same IAB nodes are controlled by the CU of the gNB 501. Accordingly, the MT and DU in one IAB are controlled by different entities, and thus it is difficult to perform coordination in real time.

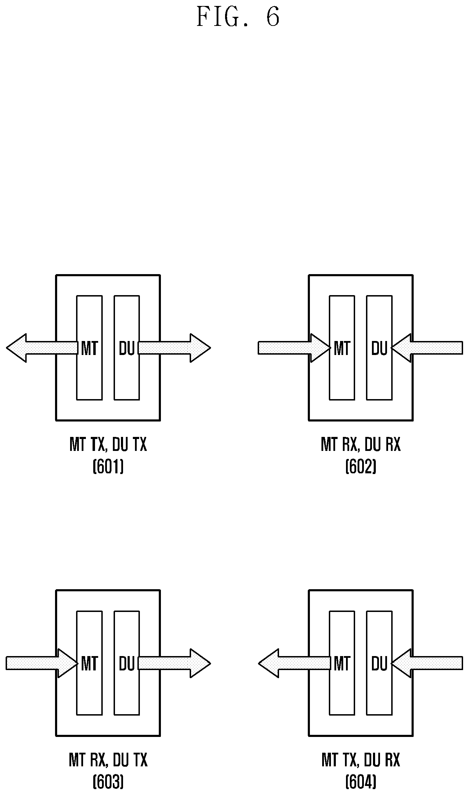

FIG. 6 illustrates a communication method for simultaneous transmission and reception between an MT and a DU within an IAB node in a wireless communication system according to an embodiment of the disclosure.

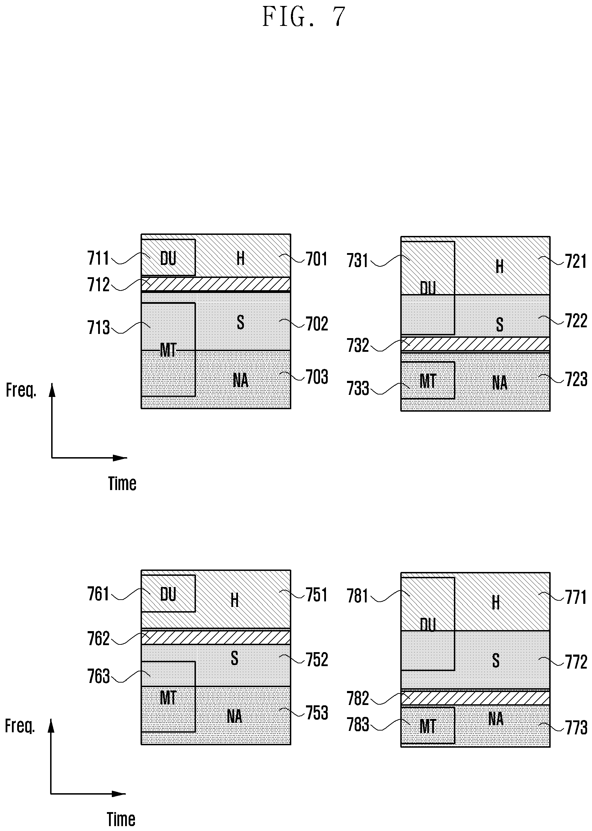

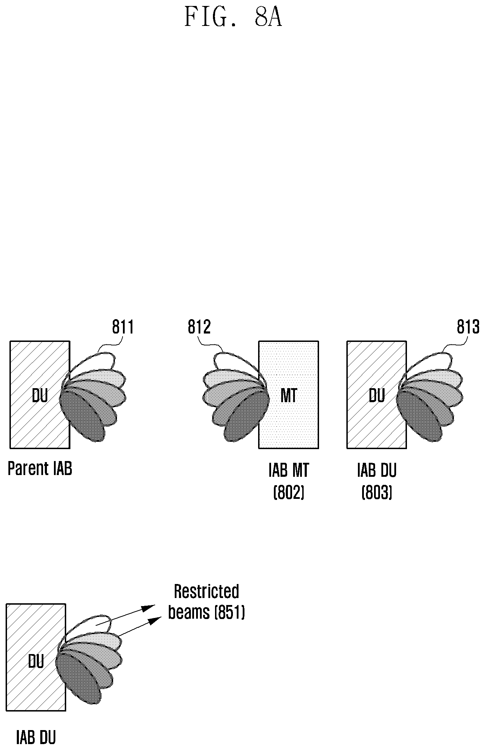

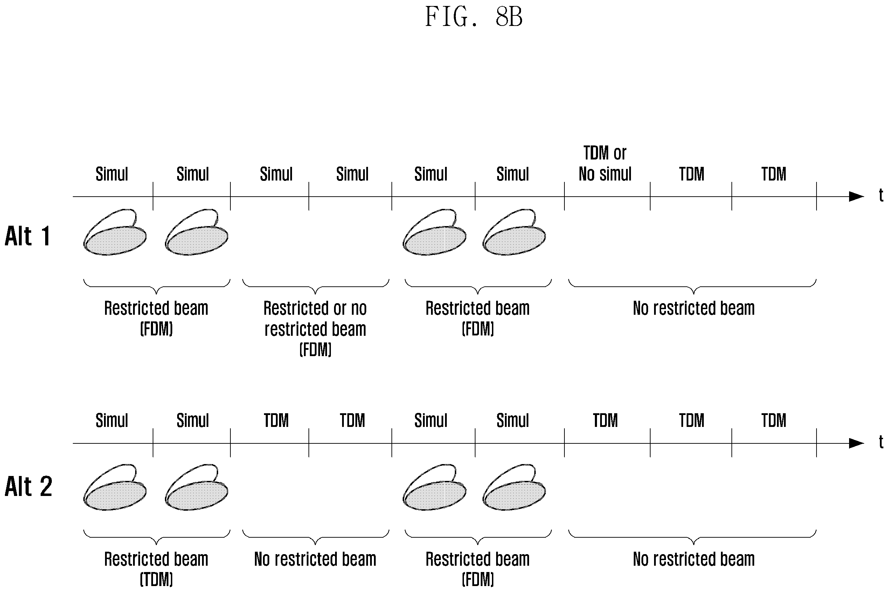

In FIG. 6, the simultaneous transmission and reception between the MT and the DU in one IAB node means that the MT performs transmission or reception and concurrently the DU performs transmission or reception within the same time resource by using the multiplexing scheme (the FDM or the SDM) described in FIG. 2 or to be described in FIG. 7 and FIGS. 8A and 8B.

Referring to FIG. 6, a first case 601 illustrates that each of the MT and the DU in one IAB node transmits a signal. In the first case 601, the signal transmitted by the MT of the IAB node may be received at the parent IAB node or the DU of the base station through the backhaul uplink as described in FIGS. 3, 4, and/or 5. In addition, in the first case 601, the signal transmitted by the DU of the IAB node at the same time (i.e., in the same time resource) may be received by the MT of the child IAB node through the backhaul downlink or by the access terminal through the access downlink as described in FIGS. 3, 4, and/or 5.

A second case 602 illustrates that each of the MT and the DU in one IAB node receives a signal. In the second case 602, the signal received by the MT of the IAB node may be a signal transmitted from the parent IAB node or the DU of the base station through the backhaul downlink as described in FIGS. 3, 4, and/or 5. In addition, in the second case 602, the signal received by the DU of the IAB node at the same time (i.e., in the same time resource) may be transmitted by the MT of the child IAB node through the backhaul uplink or by the access terminal through the access uplink as described in FIGS. 3, 4, and 5.

A third case 603 illustrates that each of the MT and the DU in one IAB node receives or transmits a signal. That is, in the third case 603, the MT in the IAB node may receive its signal, and simultaneously, the DU in the IAB node may transmit its signal. In the third case 603, the signal received by the MT of the IAB node may be a signal transmitted from the parent IAB node or the DU of the base station through the backhaul downlink as described in FIGS. 3, 4, and/or 5. In addition, in the third case 603, the signal transmitted by the DU of the IAB node at the same time (i.e., in the same time resource) may be received by the MT of the child IAB node through the backhaul downlink or by the access terminal through the access downlink as explained in FIGS. 3, 4, and/or 5.

A fourth case 604 illustrates that each of the MT and the DU in one IAB node transmits or receives a signal. That is, in the fourth case 604, the MT in the IAB node may transmit its signal, and simultaneously, the DU in the IAB node may receive its signal. In the fourth case 604, the signal transmitted by the MT of the IAB node may be received by the parent IAB node or the DU of the base station through the backhaul uplink as described in FIGS. 3, 4, and/or 5. In addition, in the fourth case 604, the signal received at the DU of the IAB node at the same time (i.e., in the same time resource) may be a signal transmitted by the MT of the child IAB node through the backhaul link or by the access terminal through the access uplink as described in FIGS. 3, 4, and/or 5.

The disclosure provides embodiments relating to a DU resource type configuration method and procedures of the parent IAB node and the IAB node according thereto in a situation in which both the MT and the DU in one IAB node transmit or receive the respective signals in the first case 601 and/or the second case 602. Hereinafter, embodiments of the disclosure may be applied to not only the first case 601 and the second case 602 but also the third case 603 and the fourth case 604.

FIG. 7 illustrates a DU resource type for FDM support of an IAB node and an operation of the IAB node in a wireless communication system according to an embodiment of the disclosure.

Referring to FIG. 7, when resources of a DU and an MT of an IAB node are multiplexed using FDM, the DU and the MT of the IAB node simultaneously perform transmission and reception in adjacent frequency resources at the same time, and thus transmission and reception interference occurs between the DU and the MT of the IAB node. A guard frequency area for reducing the transmission and reception interference may be considered. The DU resource type of the IAB node in the frequency/time domain and the operations of the DU and the MT of the IAB node according thereto may vary according whether the guard frequency area is generated by the DU of the IAB node or generated by the DU of the parent IAB node. Accordingly, a DU resource type configuration method in the frequency/time domain, a guard frequency generation method, the guard frequency generation method, and the operations of the DU and the MT of the IAB node according to the DU resource type will be described.

Hereinafter, the DU resource type configuration in the frequency/time domain is described in the disclosure.

According to an embodiment, the CU of the gNB may allocate a radio resource to the DU to allow the DU to transmit and receive data to and from the MT of its lower IAB node. The radio resource allocation may be transmitted to the DU through system information, a higher layer signal such as RRC information, or a physical layer signal by using an F1 application protocol (F1AP) interface. In this case, the radio resource may include a downlink frequency-time resource, an uplink frequency-time resource, a flexible frequency-time resource, and the like. Unlike the radio time resource using the whole band of one carrier as described in FIG. 5, the resources may be configured in the frequency/time domain which is a specific frequency (e.g., one or more physical resource blocks (PRBs) or a frequency area in which the one or more PRBs are configured as allocation units on the frequency) and a specific time (e.g., one or more slots) within one carrier. Hereafter, the "frequency-time" is omitted in the resource for convenience of description.

Similar to the description made in the radio time resource, with respect to the downlink resource, the uplink resource, and the flexible resource, information on the three types (or at least one of the three types) may be indicated from the CU to the DU of the IAB node.

The first type is a soft type, and the CU of the gNB may configure a soft-type downlink resource, uplink resource, and flexible resource to the DU of the IAB node by using the F1AP interface (the interface between the CU and the DU). In this case, for the configured soft-type resources, the IAB node corresponding to the parent IAB node (or the DU of the parent IAB) of the IAB node may explicitly (e.g., by the DCI format) or implicitly indicate, to the IAB node corresponding to the child IAB node (or the DU of the child IAB), whether the resource is available or not available. That is, if it is indicated that a specific resource is available for the parent IAB (or the DU of the parent IAB) of the IAB node, the DU of the IAB node may use the resource for data transmission and reception to or from the MT of the lower IAB node. In addition, by using the resource, the DU of the IAB node may perform transmission in a case of a downlink resource and perform reception in a case of an uplink resource. If it is indicated that the resource is unavailable, the IAB node cannot use the resource for the data transmission and reception to and from the MT of the lower IAB node. That is, by using the resource, the DU of the IAB node may perform the transmission or the reception.

Hereinafter, the disclosure provides a method for indicating the availability of the soft-type resource by the DCI format. The DCI format in such an embodiment may include an availability indicator for indicating the availability of one or more consecutive uplink, downlink, or flexible symbols.

To receive the DCI format, the IAB node may receive, through a higher layer signal from the CU or the parent IAB, information on one or more of location information of the availability indicator indicating the availability of the IAB node in the DCI format, a table indicating the availability of multiple frequency-time resources, and a mapping relation of the availability indicators, along with a cell ID of the DU of the IAB node in advance.

The second type is a hard type, and the resources are always utilized between the DU and the MT. That is, the DU of the IAB node may perform transmission when the resource is a downlink time resource, and may perform reception when the resource is an uplink resource, regardless of the transmission or reception operation of the MT of the IAB node. When the resource is a flexible resource, transmission or reception is performed in the resource according to the determination of the IAB DU (that is, to match to the DCI format indicating, to the MT of the lower IAB node, whether the flexible resource is a downlink resource or an uplink resource).

The third type of resource is a type of resource that is always not available (always unused or always unavailable), and the above resources are not available when the DU of IAB node performs data transmission and reception to or from the MT.

The above types of resources may be received together when a downlink time resource, an uplink time resource, a flexible time resource, and a reserved time resource are received from the CU to the DU through a higher-layer signal.

Hereinafter, the disclosure provides a method for generating a guard frequency and operations of a DU and an MT of an IAB node according to a DU resource type.

As a first method, a method in which the guard frequency is generated by the DU of the IAB node corresponding to a child IAB node of a base station/parent IAB node is disclosed. The first part 710 to 713 of FIG. 7 illustrates that a hard type 701, a soft type 702, and an NA type 703 corresponding to DU resource types of the IAB node are configured by the CU in the frequency-time area. In this case, it is assumed that the DU of the IAB node has determined that the soft-type resource 702 is unavailable. In this type of resource, there may be a resource 711 actually utilized by the DU of the IAB node for data transmission and reception and a resource 713 actually utilized by the MT of the IAB node for data transmission and reception with the base station/parent IAB node. In this case, a guard frequency area 712 for reducing an influence exerted on the MT transmission and reception of the IAB node by the DU transmission and reception of the IAB node may be configured in the hard-type resource 701. The time-frequency resource in the hard type 701 is a resource which can be utilized by the DU of the IAB node, regardless of the influence by the MT of the IAB node, and the guard frequency area may be configured in the hard-type resource 701 under the control of the DU of the IAB node so that there is no interference to data transmission and reception between the MT of the IAB node and the base station/parent IAB node in the time-frequency area remaining after excluding the hard type 701, i.e., the soft type 702 determined to be unavailable by the IAB DU and the NA type 703 that is unavailable for the IAB DU. For example, as illustrated, when the hard-type resource 701, the soft-type resource 702, and the NA-type resource 703 are sequentially configured in the frequency area, the guard frequency area 712 may be configured in the hard-type resource 701 between the hard-type resource 701 and the soft-type 702 resource.

The second part 721 to 733 of FIG. 7 illustrates another example in which a hard type 721, a soft type 722, and an NA type 723 corresponding to DU resource types of the IAB node are configured by the CU in the frequency-time area. In this case, it is assumed that the DU of the IAB node has determined that the soft-type resource 722 is available. In this type of resource, there may be a resource 731 actually utilized by the DU of the IAB node for data transmission and reception and a resource 733 actually utilized by the MT of the IAB node for data transmission and reception with the base station/parent IAB node. In this case, a guard frequency area 732 for reducing an influence exerted on the MT transmission and reception of the IAB node by the DU transmission and reception of the IAB node may be configured in the soft-type resource 722 determined to be available by the DU of the IAB node. The time-frequency resource in the soft type 722 is a resource which can be utilized by the DU of the IAB node without influencing the MT of the IAB node, and the guard frequency area may be configured in the soft-type resource 722 determined to be available by the DU of the IAB node, under the control of the DU of the IAB node so that there is no interference to data transmission and reception between the MT of the IAB node and the base station/parent IAB node in the time-frequency area remaining after excluding the hard type 721 and the soft-type 722, i.e., the NA type 723 that is unavailable for the IAB DU. For example, as illustrated, when the hard-type resource 721, the soft-type resource 722, and the NA-type resource 723 are sequentially configured in the frequency area, the guard frequency area 732 may be configured in the soft-type resource 722 between the hard-type resource 721 and the soft-type 722 resource.

To sum up, in the method of generating the guard frequency by the DU of the IAB node corresponding to the child IAB node of the base station/parent IAB node by using the first method, the DU of the IAB node may transmit or receive data in the hard-type resource without considering the influence on the MT of the IAB node operating in the same time-frequency area. However, to reduce the interference to the MT of the IAB node operating in other time-frequency areas, the guard frequency may be configured in the hard-type resource.

Next, the DU of the IAB node may transmit or receive data in the soft-type resource determined to be available, without influencing the MT of the IAB node operating in the same time-frequency area. The case where the MT of the IAB node is not influenced may be described as the following cases. That is, the MT of the IAB node does not perform transmission or reception during the frequency-time resource of the DU of the IAB node. Alternatively, the transmission or reception of the MT of the IAB node does not change due to the transmission or reception of the DU of the IAB node during the frequency-time resource. Alternatively, the MT of the IAB node receives a DCI format indicating that the soft-type resource is available. However, to reduce the interference to the MT of the IAB node operation in other time-frequency areas remaining after excluding the hard-type resource, the guard frequency may be configured in the soft-type resource determined to be available.

As a second method, a method in which the guard frequency is generated by the base station/parent IAB node performing transmission or reception with the MT of the IAB node corresponding to a child IAB node. The third part 751 to 763 of FIG. 7 illustrates that a hard type 751, a soft type 752, and an NA type 753 corresponding to DU resource types of the IAB node are configured by the CU in the frequency-time area. In this case, it is assumed that the DU of the IAB node has determined that the soft-type resource 752 is unavailable. In this type of resource, there may be a resource 761 actually utilized by the DU of the IAB node for data transmission and reception and a resource 763 actually utilized by the MT of the IAB node for data transmission and reception with the base station/parent IAB node. In this case, a guard frequency area 762 for reducing an influence exerted on the MT transmission and reception of the IAB node by the DU transmission and reception of the IAB node may be configured in the soft-type resource 752. The time-frequency resource in the hard type 751 is a resource which can be utilized by the DU of the IAB node, without considering the influence to the MT of the IAB node, and the DU of the IAB node does not consider the interference, due to the transmission or reception in the hard type 751, to the data transmission and reception of the base station/parent IAB node with the MT of the IAB node in the time-frequency area remaining after excluding the hard-type 751, i.e., the soft type 752 determined to be unavailable by the IAB DU, and the NA-type 753 resource that is not available for the IAB DU. Accordingly, the guard frequency area 762 may be configured in the soft-type resource 752 under the control of the DU of the base station/parent IAB node to prevent interference. For example, as illustrated, when the hard-type resource 751, the soft-type resource 752, and the NA-type resource 753 are sequentially configured in the frequency area, the guard frequency area 762 may be configured in the soft-type resource 752 between the hard-type resource 751 and the soft-type 752 resource.

The fourth part 771 to 783 of FIG. 7 illustrates another example in which a hard type 771, a soft type 772, and an NA type 773 corresponding to DU resource types of the IAB node are configured by the CU in the frequency-time area. In this case, it is assumed that the DU of the IAB node has determined that the soft-type resource 772 is available. In this type of resource, there may be a resource 781 actually utilized by the DU of the IAB node for data transmission and reception and a resource 783 actually utilized by the MT of the IAB node for data transmission and reception with the base station/parent IAB node. In this case, a guard frequency area 782 for reducing an influence exerted on the MT transmission and reception of the IAB node by the DU transmission and reception of the IAB node may be configured in the NA-type resource 783 determined to be unavailable by the DU of the IAB node. The time-frequency resource in the soft type 722 is a resource which can be utilized by the DU of the IAB node without influencing the MT of the IAB node. The DU of the IAB node does not consider the interference, due to the transmission or reception in the soft type 772, to the data transmission and reception of the base station/parent IAB node with the MT of the IAB node in the time-frequency area remaining after excluding the hard-type 771, i.e., the NA-type 783 resource that is not available for the IAB DU. Accordingly, the guard frequency area 783 may be configured in the NA-type resource 773 under the control of the DU of the base station/parent IAB node to prevent interference. For example, as illustrated, when the hard-type resource 771, the soft-type resource 772, and the NA-type resource 773 are sequentially configured in the frequency area, the guard frequency area 782 may be configured in the NA-type resource 773 between the soft-type resource 772 and the NA-type 773 resource.

To sum up, in the method of generating the guard frequency by the DU of the base station/parent IAB node performing transmission or reception to or from the MT of the IAB node by using the second method, the DU of the IAB node may transmit or receive data in the hard-type resource without considering the influence on the MT of the IAB node operating in the same time-frequency area. However, the interference to the MT of the IAB node operating in other time-frequency areas is not considered, and to reduce the interference, the base station/parent IAB node may configure the guard frequency in the soft-type resource determined to be unavailable.

Hereinafter, in the disclosure, the DU of the IAB node may transmit or receive data in the soft-type resource determined to be available without influencing the MT of the IAB node operating in the same time-frequency area. However, the DU of the IAB node does not consider the interference to the MT of the IAB node operation in a time-frequency area remaining after excluding the soft-type and hard-type resources. To reduce the interference, the base station/parent IAB node may configure a guard frequency in the NA-type resource configured to be available.

The guard frequency configuration method may be limited to a case where the guard frequency is required, and the guard frequency configuration may be coordinated between the IAB node and the base station/parent IAB node. That is, if the guard frequency configuration is required (or if the IAB node reports that there is capability to utilize FDM), the IAB node may report, to the base station/parent IAB node through a higher-layer signal (e.g., RRC signaling or MAC CE), a physical signal (e.g., DCI), or a backhaul signal, that the guard frequency is required, and the base station/parent IAB node may indicate the guard frequency configuration through the higher-layer signal, the physical signal, or the backhaul signal.

A scheme to be used may be determined upon the standard, and whether to use the first method or the second method may be indicated to the IAB node corresponding to a child IAB node by the DU of the base station/parent IAB node through the higher-layer signal/physical signal or the backhaul signal. The IAB node may receive the indication and apply the guard frequency configuration method. Alternatively, it is also possible that both the first method and the second method are used, the guard frequencies are configured by the IAB node and the base station/parent IAB nodes, respectively, and thus the interference is removed at the most.

The guard frequency configured by the first method or the second method may be transmitted or received between the IAB node and the base station/parent IAB node through the higher-layer signal/physical signal/backhaul signal and shared.

The allocation location in the frequency domain of the DU resource type in the first method or the second method may be as follows. The hard type, the soft type, and the NA type may be sequentially configured by the CU in an ascending order of a frequency (PRB) index, and the IAB node may receive the configuration. In the soft type, a configuration of the CU or an indication by the DCI format of the base station/parent IAB node may be made so that the soft type determined to be available by the IAB DU in the soft type can be subsequent to the hard type and the soft type determined to be unavailable by the IAB DU can precede the NA type, and the IAB node may receive the configuration and the indication.

FIGS. 8A and 8B illustrate a DU beam restriction method for SDM support of an IAB node and an operation of the IAB node in a wireless communication system according to an embodiment of the disclosure.

Referring to FIGS. 8A and 8B, FIG. 8A schematically illustrates transmitting or receiving, when resources of a DU and an MT of an IAB node are multiplexed using SDM, data to or from a base station/parent IAB node 801 by an IAB node 802 or 803 corresponding to a child IAB node by using SDM (spatial division multiplexing in which simultaneous transmission and reception is performed between the DU and the MT by using different beams), i.e., by using a beam 811, 812, or 813 in a spatial domain.

As described above, a situation in which when the base station/parent IAB node 801 and the IAB node 802 or 803 corresponding to a child IAB node transmit or receive data to or from each other by using the beam 811, 812, or 813 in the spatial domain, the DU 803 of the IAB node transmits data by using the beam 813, the MT 802 of the IAB node transmits data by using the beam 812, and the DU of the base station/parent IAB node 801 receives the data transmitted by the MT 802 of the IAB node by using the beam 811 is assumed. In this case, a specific beam among the transmission beams 813 of the DU 803 of the IAB node may cause interference with a specific beam of the reception beams 811 of the DU of the base station/parent IAB node 801. To reduce the interference, the DU of the base station/parent IAB node 801 may restrict 851 the use of the transmission beams 813 of the DU 803 of the IAB node, which may cause the above-described interference, and may transmit signaling of the restricted beam 851 to the IAB node 802 or 803. The IAB node 802 or 803 may receive the signaling and the DU 803 of the IAB node may thus transmit data by using a transmission beam remaining after excluding the restricted beam 851 from the signaling.

Next, a resource for applying the restricted beam is described. The resource may be a time resource to which simultaneous transmission and reception is applied, or may be a specific time resource applied regardless of simultaneous transmission and reception.

### [Method for indicating and applying restricted beam to time resource]

In a first embodiment (Alt 1), a time domain multiplexing resource (radio resource configuration for TDM in FIG. 5) and a time resource to which simultaneous transmission and reception is indicated are distinguished so as not to be overlapped with each other and are signaled (via a higher-layer signal or a backhaul signal) in the base station/parent IAB node 801, wherein simultaneous transmission and reception is possible only in the time resource to which the simultaneous transmission and reception is indicated, for example, the time resource to which the frequency domain multiplexing resource (radio resource configuration for FMD support in FIG. 7) is indicated, and the restricted beam may be applied only to the time resource in which the simultaneous transmission and reception is possible. In addition, in the time resource to which the time domain multiplexing is indicated, the simultaneous transmission and reception may be not supported. In addition, the restricted beam may not be applied to the time domain to which the time domain multiplexing resource is indicated. Accordingly, in the first embodiment, instead of explicitly indicating the time resource in which the simultaneous transmission and reception is possible, it is also possible that the base station/parent IAB node 801 and the IAB node 802 or 803 consider that the time resource in which the simultaneous transmission and reception is possible is a time resource remaining after excluding the time resource to which the time domain multiplexing is indicated.

In a second embodiment (Alt 2), a time domain in which the simultaneous transmission and reception is performed and a time domain in which the simultaneous transmission and reception is not performed are signaled (via a higher-layer signal or a backhaul signal) by the base station/parent IAB node 801, regardless of the time domain multiplexing resource (radio resource configuration for TDM in FIG. 5) or the frequency domain multiplexing resource (radio resource configuration for the FDM resource in FIG. 7), the simultaneous transmission and reception is possible only in the time resource to which the simultaneous transmission and reception is indicated, and the restricted beam may be applied in the time resource in which the simultaneous transmission and reception is possible.

In the first and second embodiments, a case where the restricted beam is applied only in the time resource in which the simultaneous transmission and reception is possible is described, but the restricted beam may be also applied to an area in which the simultaneous transmission and reception is not possible, for example, a time domain to which the time domain multiplexing resource is indicated in the first embodiment. In this case, the types and the number of the restricted beams may vary between the area in which the simultaneous transmission and reception is possible and the area in which the simultaneous transmission and reception is not possible, and signaling including information on the restricted beams in the area in which the simultaneous transmission and reception is possible and the area in which the simultaneous transmission and reception is not possible may be indicated to the IAB node 802 or 803 by the base station/parent IAB node 801.

### [IAB DU beam restriction management method]

First, the IAB node 802 or 803 may report, to the base station/parent IAB node 801 through a higher-layer signal/backhaul signal, pieces of beam information related to an SSB and a CSI-RS for transmission to a lower terminal or other lower IAB nodes, i.e., the beam-related information (or the TCI state) including an SSB index and a CSI-RS resource ID. The beam-related information (or the TCI state) may include the following information.
- TCI state ID
- One or more pieces of quasi-co-location (QCL) information

The QCL information may include a cell ID, a bandwidth part (BWP) ID, reference signal information (e.g., CSI-RS ID information in a case where a reference signal is a CSI-RS, and SSB index information in a case where a reference signal is an SSB), and information on whether the QCL type is type A, type B, type C, or type D.

Next, the base station/parent IAB node 801 may measure, based on the pieces of beam information related to the SSB and the CRI-RS, an SSB and a CSI-RS transmitted to a lower terminal or other lower IAB nodes by the IAB node 802 or 803, and determine, based on the measured value, transmission beams to be restricted.

Lastly, the base station/parent IAB node 801 may transmit the determined beam restriction information to the IAB node 802 or 803.

### [Restricted beam indication method]

First, a method for indicating, to the MT 802 of the IAB node by the base station/parent IAB node 801, beam information which can be used for data and signal transmission and reception is described.

The base station/parent IAB node 801 may configure, for the IAB node 802 or 803, a maximum of 128 transmission configuration indication (TCU) states for the MT 802 of the IAB node through a higher-layer signal/backhaul signal. The TCI state may include the following beam-related information.
- TCI state ID
- One or more pieces of quasi-co-location (QCL) information
- The QCL information may include a cell ID, a bandwidth part (BWP) ID, reference signal information (e.g., CSI-RS ID information in a case where a reference signal is a CSI-RS, and SSB index information in a case where a reference signal is an SSB), and information on whether the QCL type is type A, type B, type C, or type D.

Next, the base station/parent IAB node 801 may indicate, to the IAB node 802 or 803 through a MAC CE signal/backhaul signal, activation of a maximum of 8 TCI states for the MT 802 of the IAB node among the maximum of 128 TCI states.

The base station/parent IAB node 801 may indicate, to each of the IAB nodes 802 and 803 through a physical signal, at least one TCI state among the maximum of 8 activated TCI states. The MT 802 of the IAB node may transmit or receive data or a signal through at least one specific beam according to the indicated at least one TCI state.

Next, a method for indicating, to the DU 803 of the IAB node by the base station/parent IAB node 801, the restricted beam information, i.e., beam information which cannot be used for the data and signal transmission and reception, is described.

In a first embodiment, the base station/parent IAB node 801 may configure, for the IAB node 802 or 803 through a higher-layer signal/backhaul signal, a maximum of M transmission configuration indication (TCI) states for the DU 803 of the IAB node. The beams in the configuration of the maximum of M TCI states may be determined within beams based on the pieces of beam information related to the SSB and the CSI-RS indicated to the base station/parent IAB node 801 from the IAB node 802 or 803 described above in [IAB DU beam restriction management method], i.e., the pieces of beam information including the SSB index and the CSI-RS resource ID.

The TCI state may include the following beam-related information.
- TCI state ID
- One or more pieces of quasi-co-location (QCL) information
- The QCL information may include a cell ID, a bandwidth part (BWP) ID, reference signal information (e.g., CSI-RS ID information in a case where a reference signal is a CSI-RS, and SSB index information in a case where a reference signal is an SSB), and information on whether the QCL type is type A, type B, type C, or type D.

Next, the base station/parent IAB node 801 may indicate, to the IAB node 802 or 803 through a MAC CE signal/backhaul signal, activation of a maximum of N TCT states among the maximum of M TCI states for the DU of the IAB node 803.

The base station/parent IAB node 801 may indicate, to each of the IAB nodes 802 and 803 through a physical signal, at least one TCI state among the maximum of N activated TCI states. The DU 803 of the IAB node may transmit or receive data and a signal through beams remaining after excluding at least one specific beam according to the at least one indicated TCI state.

In a second embodiment, the base station/parent IAB node 801 may configure, based on the pieces of beam information related to the SSB and the CSI-RS indicated to the base station/parent IAB node 801 from the IAB node 802 or 803 described above in [IAB DU beam restriction management method], i.e., the pieces of beam information including the SSB index and the CSI-RS resource ID, a MAC CE signal/backhaul signal indicating whether a beam is restricted. For example, the number and the orders of the TCI states of the pieces of beam information including the SSB index and the CSI-RS resource ID, transmitted from the IAB node 802 or 803 to the base station/parent IAB node 801 through the MAC CE signal/backhaul signal, and the number and the orders of the TCI states of the pieces of information including whether a beam is restricted, transmitted from the base station/parent IAB node 801 to the IAB node 802 or 803 through the MAC CE signal/backhaul signal, may be matched to each other. If the beam information in the MAC CE signal/backhaul signal transmitted from the base station/parent IAB node 801 to the IAB node 802 or 803 indicates that the maximum of M TCI states have been configured, whether the beam is restricted for each of the M TCI states may be indicated as "not restricted" or "restricted" by a 1-bit indicator, for example, "0" or "1". The DU 803 of the IAB node may transmit or receive data or a signal through beams remaining after excluding the restricted beam indicated through the MAC CE signal/backhaul signal.

Each of the higher-layer signal/MAC CE signal/physical signal/backhaul signal through which beam information which can be used for data and signal transmission and reception is indicated to the MT 802 of the IAB node by the base station/parent IAB node 801 and the higher-layer signal/MAC CE signal/physical signal/backhaul signal through which restricted beam information, i.e., beam information which cannot be used for data and signal transmission and reception, is indicated to the DU 803 of the IAB node by the base station/parent IAB node 801 may be configured and received by the IAB node 802 or 803, or may be configured in one signal and simultaneously received by the IAB node 802 or 803.

### [IAB node procedure according to restricted beam indication and DU resource type]

Next, a method for applying, based on a DU resource type (the DU resource type in a case of TDM in FIG. 5 or the DU resource type in a case of FDM in FIG. 7) beam restriction indicated from the base station/parent IAB node 801 by the DU 803 of the IAB node is described.

First, a method for applying beam restriction indication of an IAB node in a hard-type DU resource is described.

In a first embodiment, when the DU resource type is a hard type, the DU 803 of the IAB node may not apply the beam restriction indicated from the base station/parent IAB node 801. That is, in the hard-type resource, the DU 803 of the IAB node may transmit or receive data to or from the lower terminal and the lower IAB nodes by using all beam directions regardless of the indicated beam restriction. In the hard-type resource, the DU 803 of the IAB node may transmit or receive data without considering the influence on the data transmission and reception between the MT 802 of the IAB node and the base station/parent IAB node 801, and thus it is reasonable not to apply the beam restriction in the hard-type resource as in the first embodiment.

In a second embodiment, even though the DU resource type is a hard type, the DU 803 of the IAB node may apply the beam restriction indicated from the base station/parent IAB node 801. That is, in the hard-type resource, the DU 803 of the IAB node may transmit or receive data to or from the lower terminal and the lower IAB nodes by using a beam remaining after excluding the beam restricted according to the indicated beam restriction. The second embodiment may be reasonable to secure the data transmission and reception at most between the MT 802 of the IAB node and the base station/parent IAB node 801 by applying the beam restriction regardless of the DU resource type.

Next, a method for applying a beam restriction indication of an IAB node in a soft-type DU resource is described.

In a first embodiment, when the DU resource type is a soft type, the DU 803 of the IAB node may apply the beam restriction indicated from the base station/parent IAB node 801 only when the DU 803 of the IAB node has implicitly or explicitly determined that the soft resource is available. The case where the DU explicitly or implicitly determines that the soft source is available corresponds to a case where at least one of the following conditions is satisfied.
- (Condition 1) The MT 802 of the IAB node does not perform transmission or reception at the same time point at which the DU 803 of the IAB node performs transmission or reception. That is, condition 1 is a case where there is no scheduling from the base station/parent IAB node 801 to indicate transmission or reception at the same time point at which the DU performs transmission or reception.
- (Condition 2) A transmission/reception direction of the DU 803 of the IAB node and a transmission/reception direction of the MT 802 of the IAB node are matched to each other and half-duplex constraints can be maintained, and thus the transmission/reception direction of the DU 803 of the IAB node does not influence the transmission or reception of the MT 802 of the IAB node.
- (Condition 3) The MT 802 of the IAB node has received, from the base station/parent IAB node 801, indication that the soft resource is available for the DU 803 of the IAB node.

If at least one of the conditions above is satisfied, the DU 803 of the IAB node may transmit or receive data to or from the lower terminal and the lower IAB nodes by using a beam remaining after excluding a beam restricted according to the indicated beam restriction.

In a second embodiment, when the DU resource type is a soft type, the DU 803 of the IAB node may explicitly or implicitly determine that the soft resource is available, and the DU 803 of the IAB node may apply the beam restriction indicated from the base station/parent IAB node 801 only when the MT 802 of the IAB node actually determines that there is data transmission or reception to or from the base station/parent IAB node 801. For example, in the first embodiment, the DU 803 of the IAB node under (condition 1) may transmit or receive data to or from the lower terminal and the lower IAB nodes by using all beam directions regardless of the indicated beam restriction.

In a third embodiment, in a case where the DU resource type is a soft type, the DU 803 of the IAB node may not apply the beam restriction indicated from the base station/parent IAB node 801 in the resource if the DU 803 of the IAB node has explicitly or implicitly determined that the soft resource is available. That is, the DU 803 of the IAB node may transmit or receive data to or from the lower terminal and the lower IAB nodes in the resource by using all beam directions regardless of the indicated beam restriction.

In a fourth embodiment, when the DU resource type is a soft type, the DU 803 of the IAB node may always apply the beam restriction indicated from the base station/parent IAB node 801 in the resource. That is, the DU 803 of the IAB node may transmit or receive data to or from the lower terminal and the lower IAB nodes in the resource by using a beam remaining after excluding the beam restricted according to the indicated beam restriction.

In a fifth embodiment, in a case where the DU resource type is a soft type, the DU 803 of the IAB node may apply the beam restriction indicated from the base station/parent IAB node 801 only when the MT 802 of the IAB node has determined, based on scheduling or higher-layer configuration from the base station/parent IAB node 801, that there is data transmission or reception to or from the base station/parent IAB node 801.

In a sixth embodiment, in a case where the DU resource type is a soft type, the DU 803 of the IAB node may apply the beam restriction indicated from the base station/parent IAB node 801 only when the MT 802 of the IAB node has determined, based scheduling or higher-layer configuration from the base station/parent IAB node 801, that the data transmission or reception to or from the base station/parent IAB node 801 actually occurs.

In a seventh embodiment, in a case where the DU resource type is a soft type, the DU 803 of the IAB node may apply the beam restriction indicated from the base station/parent IAB node 801 in the resource only when the DU 803 of the IAB node actually performs data transmission or reception. That is, the DU 803 of the IAB node may transmit or receive data to or from the lower terminal and the lower IAB nodes in the resource by using the beam remaining after excluding the beam restricted according to the indicated beam restriction.

With respect to the method for applying the beam restriction indication of the IAB node in the soft-type DU resource, two or more embodiments may be combined and used.

In another embodiment, the indicated beam restriction may not be applied regardless of the DU resource type when the DU 803 of the IAB node transmits or receives an essential channel or signal. For example, when the DU 803 of the IAB node transmits an SS/PBCH block, transmits a PDCCH for SIB1 transmission, transmits a periodic CSI-RS, or receives a PRACH or SR, the DU may transmit or receive data to or from the lower terminal and the lower IAB nodes by using all beam directions regardless of the indicated beam restriction.

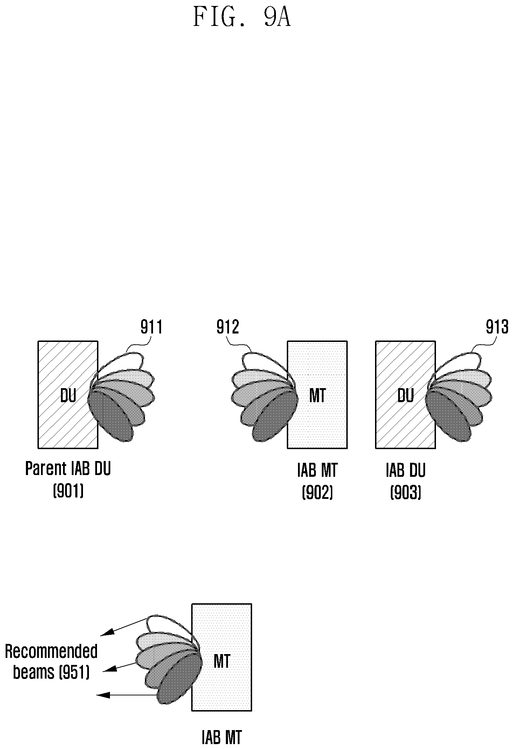

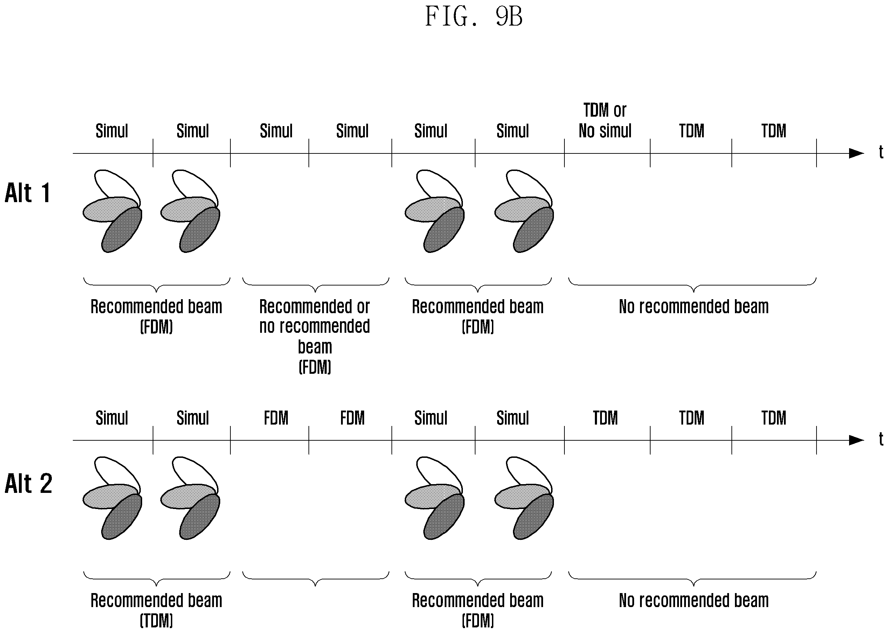

FIGS. 9A and 9B illustrate an MT beam recommendation method for spatial division multiplexing (SDM) of an IAB node and an operation of the IAB node in a wireless communication system according to an embodiment of the disclosure.

Referring to FIGS. 9A and 9B, FIG. 9A schematically illustrates transmitting or receiving, when resources of a DU and an MT of an IAB node are multiplexed using SDM, data to or from a base station/parent IAB node 901 by an IAB node 902 or 903 corresponding to a child IAB node by using SDM, i.e., by using a beam 911, 912, or 913 in a spatial domain.

Through FIGS. 9A and 9B, two situations to which the embodiments proposed in the disclosure are applicable are described. First, as a first situation, as described above, a situation in which when the base station/parent IAB node 901 and the IAB node 902 or 903 corresponding to a child IAB node transmit or receive data to or from each other by using the beam 911, 912, or 913 in the spatial domain, the DU 903 of the IAB node transmits data by using the beam 913, the MT 902 of the IAB node receives data by using the beam 912, and the DU of the base station/parent IAB node 901 transmits the data to the MT 902 of the IAB node by using the beam 911 is assumed. In this case, a specific beam among the transmission beams 913 of the DU 903 of the IAB node may cause interference with a specific beam of the reception beams 912 of the MT 902 of the IAB node for receiving data from the DU of the base station/parent IAB node 901. To reduce the interference and receive data by selecting beams having good environments, the MT 902 of the IAB node may signal, to the base station/parent IAB node 901, recommended beams 951 which can be used for data reception among beams remaining after excluding beams receiving the interference. The base station/parent IAB node 901 may transmit data to the MT 903 of the IAB node by using an appropriate beam from among the recommended beams 951 included in the signaling.

As a second situation, as described above, a situation in which when the base station/parent IAB node 901 and the IAB node 902 or 903 corresponding to a child IAB node transmit or receive data to or from each other by using the beam 911, 912, or 913 in the spatial domain, the DU 903 of the IAB node receives data by using the beam 913, the MT 902 of the IAB node transmits data by using the beam 912, and the DU of the base station/parent IAB node 901 receives, by using the beam 911, the data transmitted by the MT 902 of the IAB node is assumed. In this case, a specific beam among the transmission beams 912 of the MT 902 of the IAB node may cause interference with a specific beam of the reception beams 913 of the DU 903 of the IAB node. To reduce the interference and transmit data by selecting beams having good environments, the MT 902 of the IAB node may signal, to the base station/parent IAB node 901, recommended beams 951 which can be used for data transmission among beams remaining after excluding beams receiving the interference. The base station/parent IAB node 901 may perform scheduling so that the MT 903 of the IAB node transmits data by selecting an appropriate beam from among the recommended beams 951 included in the signaling.

Next, a resource for applying the recommended beam is described. The resource may be a time resource to which simultaneous transmission and reception is applied, or may be a specific time resource applied regardless of simultaneous transmission and reception.

### [Method for indicating and applying recommended beam to time resource]

In a first embodiment (Alt 1), a time domain multiplexing resource (radio resource configuration for TDM in FIG. 5) and a time resource to which simultaneous transmission and reception is indicated are distinguished so as not to be overlapped with each other and are signaled (via a higher-layer signal or a backhaul signal) in the base station/parent IAB node 901, wherein simultaneous transmission and reception is possible only in the time resource to which the simultaneous transmission and reception is indicated, for example, the time resource to which the frequency domain multiplexing resource (radio resource configuration for FMD support in FIG. 7) is indicated, and the recommended beam may be applied only to the time resource in which the simultaneous transmission and reception is possible. In addition, in the time resource to which the time domain multiplexing is indicated, the simultaneous transmission and reception may be not supported. In addition, the recommended beam may not be applied to the time domain to which the time domain multiplexing resource is indicated. Accordingly, in the first embodiment, instead of explicitly indicating the time resource in which the simultaneous transmission and reception is possible, it is also possible that the base station/parent IAB node 901 and the IAB node 902 or 903 consider that the time resource in which the simultaneous transmission and reception is possible is a time resource remaining after excluding the time resource to which the time domain multiplexing is indicated.

In a second embodiment (Alt 2), a time domain in which the simultaneous transmission and reception is performed and a time domain in which the simultaneous transmission and reception is not performed are signaled (via a higher-layer signal or a backhaul signal) by the base station/parent IAB node 901, regardless of the time domain multiplexing resource (radio resource configuration for TDM in FIG. 5) or the frequency domain multiplexing resource (radio resource configuration for the FDM resource in FIG. 7), the simultaneous transmission and reception is possible only in the time resource to which the simultaneous transmission and reception is indicated, and the recommended beam may be applied in the time resource in which the simultaneous transmission and reception is possible.

In the first and second embodiments, a case where the recommended beam is applied only in the time resource in which the simultaneous transmission and reception is possible is described, but the recommended beam may be also applied to an area in which the simultaneous transmission and reception is not possible, for example, a time domain to which the time domain multiplexing resource is indicated in the first embodiment. In this case, the types and the number of the recommended beams may vary between the area in which the simultaneous transmission and reception is possible and the area in which the simultaneous transmission and reception is not possible, and signaling including information on the recommended beams in the area in which the simultaneous transmission and reception is possible and the area in which the simultaneous transmission and reception is not possible may be reported or transmitted to the base station/parent IAB node 901 from the IAB node 902 or 903.

### [IAB MT beam recommendation management method]

First, the base station/parent IAB node 901 may configure, for the IAB node 902 or 903 through a higher-layer signal/backhaul signal, a TCI state including possible transmission and reception beam information for the MT 902 of the IAB node. The TCI state may include the following beam-related information.
- TCI state ID
- One or more pieces of quasi-co-location (QCL) information
- The QCL information may include a cell ID, a bandwidth part (BWP) ID, reference signal information (e.g., CSI-RS ID information in a case where a reference signal is a CSI-RS, SSB index information in a case where a reference signal is an SSB, and SRS resource ID information and UL BWP ID information in a case where a reference signal is an SRS), and information on whether the QCL type is type A, type B, type C, or type D.

Next, the base station/parent IAB node 901 may indicate, to the IAB node 902 or 903 through a MAC CE signal/backhaul signal, activation of a specific TCI state among the TCI states for the MT 902 of the IAB node.

The IAB node 902 or 903 may determine a reception beam to be recommended or a recommended transmission beam in consideration of an interference situation or a channel situation of the DU 903 of the IAB node and the MT 902 of the IAB node among the TCI states configured through the higher-layer signal/backhaul signal or the specific activated TCI states through the MAC CE signal/backhaul signal.

Lastly, the IAB node 902 or 903 may transmit the determined beam restriction information to the base station/parent IAB node 901.

When the IAB node 902 or 903 selects, based on the TCI states configured through the higher-layer signal/backhaul signal, the reception beam to be recommended or the recommended transmission beam and reports the same to the base station/parent IAB node 901, the base station/parent IAB node 901 may select beams to be activated from among the reported recommended beams to perform activation through the MAC CE signal/backhaul signal. The base station/parent IAB node 901may indicate at least one TCI state among the activated TCI states to the IAB node 802 or 803 through a physical signal. The MT 902 of the IAB node may transmit or receive data and a signal through at least one specific beam according to the at least one indicated TCI state.

### [Recommdned beam indication method]

First, a method for reporting recommended downlink reception beam information to the base station/parent IAB node 901 by the IAB node 902 or 903 is described.

In a first embodiment, the IAB node 902 or 903 may transmit recommended downlink reception beam information to the base station/parent IAB node 901 through a CRI-RSRP or ssb-index-RSRP report corresponding to uplink control information. In this case, the recommended downlink reception beam information number may be defined by the standard, may be transmitted to the IAB node 902 or 903 by the base station/parent IAB node 901 in advance through the higher-layer signal/backhaul signal, or may be transmitted to the base station/parent IAB node 901 through the TCI state number included in each of the CRI-RSRP and the ssb-index-RSRP. The CRI-RSRP or the ssb-index-RSRP may include as many pieces of 7-bit recommended downlink reception beam information as the recommended downlink reception beam information number, and may include as many pieces of 7-bit, 4-bit, 4-bit, 4-bit, and ... recommended downlink reception beam information as the recommended downlink reception beam information number according to the sequence.

In a second embodiment, the IAB node 902 or 903 may transmit recommended downlink reception beam information to the base station/parent IAB node 901 through a higher-layer signal/MAC CE signal/backhaul signal.

The information may include the following beam-related information.
- TCI state ID
- One or more pieces of quasi-co-location (QCL) information
- The QCL information may include a cell ID, a bandwidth part (BWP) ID, reference signal information (e.g., CSI-RS ID information in a case where a reference signal is a CSI-RS, and SSB index information in a case where a reference signal is an SSB), and information on whether the QCL type is type A, type B, type C, or type D. Alternatively, in a case where the IAB node 902 or 903 selects, based on the TCI states configured from the base station/parent IAB node 901 through the higher-layer/backhaul signal, a reception beam to be recommended and report the same to the base station/parent IAB node 901, if the beam information in the MAC CE signal/backhaul signal indicates that the maximum of M TCI states have been configured, whether the reception beam is recommended for each of the M TCI states may be indicated as "not recommended" or "recommended" by a 1-bit indicator, for example, "0" or "1". In addition, according to an embodiment, the number and the orders of the TCI states configured from the base station/parent IAB node 901 and the number and orders of the TCI states of the pieces of beam information in the MAC CE signal/backhaul signal including information to be recommended by the IAB node 902 or 903 may be matched to each other.

Next, a method for reporting recommended uplink transmission beam information to the base station/parent IAB node 901 by the IAB node 902 or 903 is described.

In a first embodiment, the IAB node 902 or 903 may transmit recommended uplink transmission beam information to the base station/parent IAB node 901 through a CRI-RSRP or ssb-index-RSRP report corresponding to uplink control information. In this case, the CRI-RSRP or ssb-index RSRP report including the recommended uplink transmission beam information number may be a report separate from the CRI-RSRP or the ssb-index-RSRP for reporting the recommended downlink reception beam information.

In this case, the recommended uplink transmission beam information number may be defined by the standard, may be transmitted to the IAB node 902 or 903 by the base station/parent IAB node 901 in advance through the higher-layer signal/backhaul signal, or may be transmitted to the base station/parent IAB node 901 through the TCI state number included in each of the CRI-RSRP and the ssb-index-RSRP. The CRI-RSRP or the ssb-index-RSRP may include as many pieces of 7-bit recommended uplink transmission beam information as the recommended uplink transmission beam information number, and may include as many pieces of 7-bit, 4-bit, 4-bit, 4-bit, and ... recommended uplink transmission beam information as the recommended uplink downlink beam information number according to the sequence.

In a second embodiment, the IAB node 902 or 903 may transmit recommended uplink transmission beam information to the base station/parent IAB node 901 through a higher-layer signal/MAC CE signal/backhaul signal.

The information may include the following beam-related information.
- TCI state ID
- One or more pieces of quasi-co-location (QCL) information
- The QCL information may include a cell ID, a bandwidth part (BWP) ID, reference signal information (e.g., CSI-RS ID information in a case where a reference signal is a CSI-RS, SSB index information in a case where a reference signal is an SSB, and a sounding reference signal (SRS) resource ID (SRI) and a UL BWP ID in a case where a reference signal is an SRS), and information on whether the QCL type is type A, type B, type C, or type D. Alternatively, in a case where the IAB node 902 or 903 selects, based on the TCI states configured from the base station/parent IAB node 901 through the higher-layer/backhaul signal, a transmission beam to be recommended and report the same to the base station/parent IAB node 901, if the beam information in the MAC CE signal/backhaul signal indicates that the maximum of M TCI states have been configured, whether the reception beam is recommended for each of the M TCI states may be indicated as "not recommended" or "recommended" by a 1-bit indicator, for example, "0" or "1". In addition, according to an embodiment, the number and the orders of the TCI states configured from the base station/parent IAB node 901 and the number and orders of the TCI states of the pieces of beam information in the MAC CE signal/backhaul signal including information to be recommended by the IAB node 902 or 903 may be matched to each other.

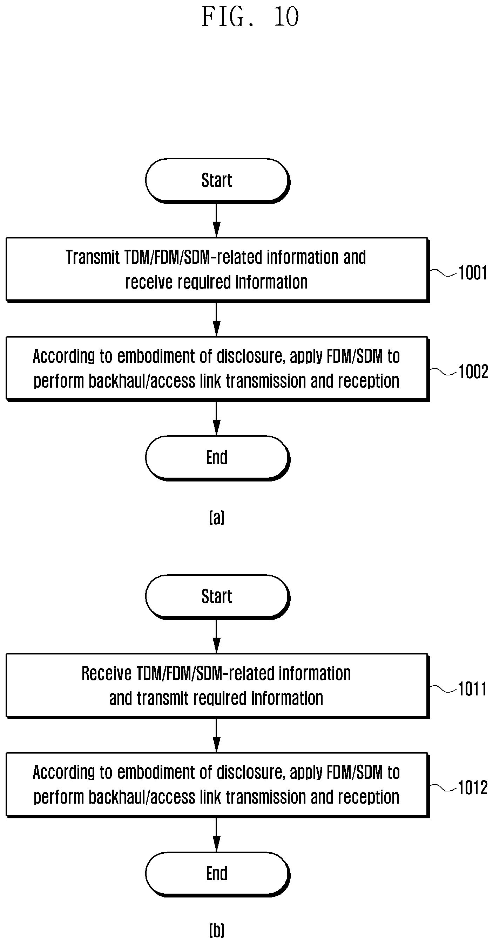

Part (a) of FIG. 10 illustrates an operation of a base station/parent IAB node in a wireless communication system according to an embodiment of the disclosure.

Referring to part (a) of FIG. 10, in operation 1001, a base station/parent IAB node (e.g., the parent IAB node of FIGS. 8A and 8B and/or FIGS. 9A and 9B) may transmit information related to TDM, FDM, or SMD to an IAB node, and receive required information from the IAB node. As described above, the information may include information required to switch to TDM, FDM, or SDM, information required to support TDM, FDM, or SDM, information required to operate a beam by the IAB node and the base station/parent IAB node, information related to a restricted beam and a recommended beam, etc. The information required to support TDM, FDM, or SDM may include radio resource allocation information including a DU resource type, information related to availability of a soft-type resource, information on a need for a guard frequency, information on a guard frequency configuration method, TCI state configuration information, DU resource type configuration information for specific beams corresponding to a TCI state, configuration information on whether the resource is available for the DU, information on a restricted beam and a recommended beam, etc.

In operation 1002, the base station/parent IAB node may transmit or receive backhaul data to the IAB node by applying TDM, FDM, or SDM.

Part (b) of FIG. 10 illustrates an operation of an IAB node corresponding to a child IAB node in a wireless communication system according to an embodiment of the disclosure.

Referring to part (b) of FIG. 10, in operation 1011, an IAB node may receive information related to TDM, FDM, or SMD from a base station/parent IAB node, and transmit required information to the base station/parent IAB node. As described above, the information may include information required to switch to TDM, FDM, or SDM, information required to support FDM or SDM, information required to operate a beam by the IAB node and the base station/parent IAB node, information related to a restricted beam and a recommended beam, etc. The information required to support TDM, FDM, or SDM may include radio resource allocation information including a DU resource type, information related to availability of a soft-type resource, information on a need for a guard frequency, information on a guard frequency configuration method, TCI state configuration information, DU resource type configuration information for specific beams corresponding to a TCI state, configuration information on whether the resource is available for the DU, information on a restricted beam and a recommended beam, etc.

In operation 1012, the IAB node may transmit or receive backhaul data to the base station/parent IAB node by applying TDM, FDM, or SDM.

To perform the embodiments of the disclosure, FIGS. 11 and 12 illustrate transmitters, receivers, and processors of a terminal and a base station, respectively. The transmitter and the receiver may be referred to as a transceiver. In addition, FIG. 13 illustrates a device of an IAB node. A transmission and reception method of a base station (donor base station) for performing transmission or reception to or from the IAB node in a backhaul link via mmWave and a terminal for performing transmission or reception to or from an IAB node in an access link in a case where a signal is transmitted or received in a backhaul link or an access link through an IAB node in a 5G communication system as described in the embodiments above are indicated, and thus each of the transmitters, the receivers, and the processors of the base station, the terminal, and the IAB node may operate according to an embodiment to perform the transmission and reception method.

FIG. 11 illustrates a configuration of a terminal according to an embodiment of the disclosure.

Referring to FIG. 11, the terminal of the disclosure may include a processor 1101, a receiver 1102, and a transmitter 1103.

The processor 1101 (or a controller or a processing unit) may control a series of processes in which the terminal may operate according to embodiments of the disclosure of FIGS. 1 to 10 alone or in combination. For example, the access link transmission and reception with the IAB node may be controlled differently according to embodiments of the disclosure. The receiver 1102 and the transmitter 1103 may be collectively referred to as a transceiver in the embodiment of the disclosure. The transceiver 1102 or 1103 may transmit and receive signals to and from the base station. The signal may include at least one piece of control information and data. To this end, the transceiver 1102 or 1103 may include an RF transmitter which up-converts and amplifies the frequency of the transmitted signal, an RF receiver which amplifies the received signal with low noise and down-converts the frequency, and the like. In addition, the transceiver 1102 or 1103 may receive a signal through a radio channel, output the same to the processor 1101, and transmit the signal output from the processor 1101 through the radio channel.

FIG. 12 illustrates a configuration of a base station (a donor base station) according to an embodiment of the disclosure.

Referring to FIG. 12, the base station of the disclosure may include a processor 1201, a receiver 1202, and/or a transmitter 1203.

The processor 1201 (or a controller or a processing unit) may control a series of processes in which the base station may operate according to embodiments of the disclosure of FIGS. 1 to 10 alone or in combination. For example, the backhaul link transmission and reception and the access link transmission and reception with the IAB node may be controlled differently according to embodiments of the disclosure. The receiver 1202 and the transmitter 1203 may be collectively referred to as a transceiver in the embodiment of the disclosure. The transceiver 1202 or 1203 may transmit and receive signals to and from a terminal or a lower (child) IAB node. The signal may include at least one piece of control information and data. To this end, the transceiver 1202 or 1203 may include an RF transmitter which up-converts and amplifies the frequency of the transmitted signal, an RF receiver which amplifies the received signal with low noise and down-converts the frequency, and the like. In addition, the transceiver 1202 or 1203 may receive a signal through a radio channel, output the same to the processor 1201, and transmit the signal output from the processor 1201 through the radio channel.

FIG. 13 illustrates a configuration of an IAB node according to an embodiment of the disclosure.

Referring to FIG. 13, the IAB node of the disclosure may include a base station function controller 1301 (or a processing unit or a processor) of the IAB node for transmitting and receiving data to and from a lower (child) IAB node through a (wireless) backhaul link, a base station function receiver 1302, and a base station function transmitter 1303. In addition, the IAB node may include a terminal function controller 1311 (or a processing unit or a processor) of the IAB node for initially accessing a higher (parent) IAB node and/or a donor base station, transmitting and receiving a higher-layer signal before performing transmission and reception through the backhaul link, and transmitting and receiving data to and from the higher (parent) IAB node and the donor base station through the (wireless) backhaul link, a terminal function receiver 1312, a terminal function transmitter 1313, and the like.

The base station function controller 1301 of the IAB node may control a series of processes in which the IAB node may operate like the base station according to an embodiment of the disclosure, and for example, may perform the functions of the DU of the IAB node as described above. For example, the base station function controller 1301 may differently control the backhaul link transmission and reception with the lower IAB node and the access link transmission and reception with the terminal according to an embodiment of the disclosure. The base station function receiver 1302 and the base station function transmitter 1303 may be collectively referred to as a first transceiver or a first transmission/reception unit in the embodiment of the disclosure. The first transceiver may transmit and receive a signal to and from the lower (child) IAB node and the terminal. The signal may include at least one piece of control information and data. To this end, the first transceiver may include an RF transmitter which up-converts and amplifies the frequency of the transmitted signal, an RF receiver which amplifies the received signal with low noise and down-converts the frequency, and the like. In addition, the first transceiver may receive a signal through a radio channel, output the same to the base station function controller 1301, and transmit the signal output from the base station function controller 1301 through the radio channel.

The terminal function controller 1311 of the IAB node may control a series of processes in which the lower (child) IAB node may operate like the terminal for the data transmission and reception with the donor base station or the higher (parent) IAB node according to an embodiment of the disclosure, and for example, may perform the functions of the MT of the IAB node as described above. For example, the terminal function controller 1311 may differently control the (wireless) backhaul link transmission and reception with the donor base station and/or the higher (parent) IAB node according to an embodiment of the disclosure. The terminal function receiver 1312 and the terminal function transmitter 1313 may be collectively referred to as a second transceiver or a second transmission/reception unit in the embodiment of the disclosure. The second transceiver may transmit and receive a signal to and from the donor base station and the higher IAB node. The signal may include at least one piece of control information and data. To this end, the second transceiver may include an RF transmitter which up-converts and amplifies the frequency of the transmitted signal, an RF receiver which amplifies the received signal with low noise and down-converts the frequency, and the like. In addition, the second transceiver may receive a signal through a radio channel, output the same to the terminal function controller 1311, and transmit the signal output from the terminal function controller 1311 through the radio channel.

Meanwhile, the base station function controller 1301 of the IAB node and the terminal function controller 1311 of the IAB node included in the IAB node of FIG. 13 may be integrated and implemented as an IAB node controller. In this case, an IAB node controller 1300 may control the functions of the DU and the MT together in the IAB node. The base station function controller 1301, the terminal function controller 1311, and the IAB node controller may be implemented as at least one processor. The first transceiver and the second transceiver may be included individually or implemented as one integrated transceiver.

The beam described in the disclosure indicates a spatial signal flow in the radio channel, and is formed by one or more antennas (or antenna elements), which may be referred to as beamforming. According to various embodiments, an antenna array including multiple antenna elements may be used, and the form (i.e., coverage) according to a signal gain may have a direction. A beam used in the signal transmission may be referred to as a transmission beam, and a beam used in the signal reception may be referred to as a reception beam. That is, the IAB node may include an antenna array for the MT or an antenna array for the DU, as one implementation.

If the IAB node transmits a signal in the transmission beam direction, the signal gain of the device may increase. If transmitting the signal by using the transmission beam, the signal may be transmitted through a spatial domain transmission filter of a signal transmission side, that is, a transmission end. If transmitting a signal by using multiple transmission beams, the transmission end may transmit the signal by changing a spatial domain transmission filter. For example, in the transmission using the same transmission beam, the transmission end may transmit the signal through the same spatial domain transmission filter. For example, if the MT of the IAB node receives CSI-RSs for reception beam discovery (e.g., 3GPP TS 38.214 repetition = "on"), the IAB node may assume that the CSI-RSs are transmitted through the same spatial domain transmission filter.

If the IAB node receives a signal in the reception beam direction, the signal gain of the device may increase. If receiving the signal by using the reception beam, the signal may be received through a spatial domain reception filter of a signal reception side, that is, a reception end. For example, if the IAB node simultaneously receives several signals transmitted using different beams, the IAB node may receive the signals by using a single spatial domain reception filter, or may receive the signals by using multiple spatial domain reception filters.

In addition, in the disclosure, as a signal transmitted using a beam, a reference signal may be used, and for example, the reference signal may include a demodulation-reference signal (DM-RS), a channel state information-reference signal (CSI-RS), a synchronization signal/physical broadcast channel (SS/PBCH), and a sounding reference signal (SRS). In addition, as a configuration for each reference signal, an indicator such as a CSI-RS resource and an SRS-resource may be used, and such configuration may include information association with the beam. The information associated with the beam may indicate whether the corresponding configuration (e.g., a CSI-RS resource) uses the same spatial domain filter as another configuration (e.g., another CSI-RS resource in the same CSI-RS resource set) or a different spatial domain filter, a reference signal which is QCLed, and if QCLed, a type (e.g., QCL types A, B, C, D) of the QCL. The QCL type may be defined as follows.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

In the disclosure, according to various embodiments, the IAB node may measure a beam quality to acquire a cell quality and a duplex quality. The IAB node may obtain the beam quality based on the CSI-RS or the SS/PBCH block.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Furthermore, the above respective embodiments may be employed in combination, as necessary.

The methods according to various embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments, but should be defined by the appended claims and equivalents thereof.

## Claims

1. A method performed by a base station in a wireless communication system, the method comprising:
determining information indicating a restricted beam which cannot be used for transmission or reception by a distributed unit (DU) of an integrated access and backhaul (IAB) node connected to the base station; and
transmitting, to the IAB node, a message comprising the information indicating the restricted beam.

2. The method of claim 1,
wherein the message further comprises information on a beam to be used for data transmission or reception by a mobile termination (MT) of the IAB node.

3. The method of claim 1,
wherein the information indicating the restricted beam comprises at least one of identification information on a channel state information reference signal (CSI-RS) or identification information on a synchronization signal block (SSB),
wherein the information indicating the restricted beam is applied in case that the IAB mode operates in a non-time division multiplexing (TDM) mode, and
wherein the message comprises a medium access control (MAC) control element (CE).

4. The method of claim 1, further comprising:
receiving, from the IAB node, information indicating a recommended beam of the IAB node,
wherein the information indicating the recommended beam comprises at least one of identification information on a channel state information reference signal (CSI-RS), identification information on a synchronization signal block (SSB), a transmission configuration indication (TCI) state identifier (ID), or a sounding reference signal resource indicator (SRI).

5. A method performed by an integrated access and backhaul (IAB) node in a wireless communication system, the method comprising:
receiving, from a base station, a message comprising information indicating a restricted beam which cannot be used for transmission or reception by a distributed unit (DU) of the IAB node; and
performing, based on the information indicating the restricted beam, transmission or reception with a terminal or another IAB by using the DU.

6. The method of claim 5, wherein the message further comprises information on a beam to be used for data transmission or reception by a mobile termination (MT) of the IAB node.

7. The method of claim 5,
wherein the information indicating the restricted beam comprises at least one of identification information on a channel state information reference signal (CSI-RS) or identification information on a synchronization signal block (SSB),
wherein the information indicating the restricted beam is applied in case that the IAB node operates in a non-time division multiplexing (TDM) mode, and
wherein the message comprises a medium access control (MAC) control element (CE).

8. The method of claim 5, further comprising:
transmitting, to the base station, information indicating a recommended beam of the IAB node,
wherein the information indicating the recommended beam comprises at least one of identification information on a channel state information reference signal (CSI-RS), identification information on a synchronization signal block (SSB), a transmission configuration indication (TCI) state identifier (ID), or a sounding reference signal resource indicator (SRI).

9. A base station in a wireless communication system, the base station comprising:
a transceiver; and
a controller coupled with the transceiver and configured to:
determine information indicating a restricted beam which cannot be used for transmission or reception by a distributed unit (DU) of an integrated access and backhaul (IAB) node connected to the base station, and
transmit, to the IAB node, a message comprising the information indicating the restricted beam.

10. The base station of claim 9,
wherein the message further comprises information on a beam to be used for data transmission or reception by a mobile termination (MT) of the IAB node.

11. The base station of claim 9,
wherein the information indicating the restricted beam comprises at least one of identification information on a channel state information reference signal (CSI-RS) or identification information on a synchronization signal block (SSB),
wherein the information indicating the restricted beam is applied in case that the IAB mode operates in a non-time division multiplexing (TDM) mode, and
wherein the message comprises a medium access control (MAC) control element (CE).

12. The base station of claim 9, wherein the controller is configured to:
receive, from the IAB node, information indicating a recommended beam of the IAB node, and
wherein the information indicating the recommended beam comprises at least one of identification information on a channel state information reference signal (CSI-RS), identification information on a synchronization signal block (SSB), a transmission configuration indication (TCI) state identifier (ID), or a sounding reference signal resource indicator (SRI).

13. An integrated access and backhaul (IAB) node in a wireless communication system, the IAB node comprising:
a transceiver; and
a controller coupled with the transceiver and configured to:
receive, from a base station, a message comprising information indicating a restricted beam which cannot be used for transmission or reception by a distributed unit (DU) of the IAB node, and
perform, based on the information indicating the restricted beam, transmission or reception with a terminal or another IAB by using the DU.

14. The IAB node of claim 13,
wherein the message further comprises information on a beam to be used for data transmission or reception by a mobile termination (MT) of the IAB node,
wherein the information indicating the restricted beam comprises at least one of identification information on a channel state information reference signal (CSI-RS) or identification information on a synchronization signal block (SSB),
wherein the information indicating the restricted beam is applied in case that the IAB node operates in a non-time division multiplexing (TDM) mode, and
wherein the message comprises a medium access control (MAC) control element (CE).

15. The IAB node of claim 13, wherein the controller is configured to:
transmit, to the base station, information indicating a recommended beam of the IAB node, and
wherein the information indicating the recommended beam comprises at least one of identification information on a channel state information reference signal (CSI-RS), identification information on a synchronization signal block (SSB), a transmission configuration indication (TCI) state identifier (ID), or a sounding reference signal resource indicator (SRI).
